# EUROPEAN PATENT APPLICATION

(11) **EP 2 498 545 A1**
(43) Date of publication of application: **12.09.2012**
(21) Application number: 10828346.6
(22) Date of filing: 05.11.2010
(51) Int. Cl.: H04W 36/28, H04W 4/22, H04W 36/14, H04W 48/18

(54) **CONTROL STATION DEVICE, MOBILE STATION DEVICE, GATEWAY DEVICE, MOBILE COMMUNICATION SYSTEM, AND COMMUNICATION METHOD**

(30) Priority: 06.11.2009 JP 2009255422
(71) Applicant: Sharp Kabushiki Kaisha, Osaka-shi, Osaka 545-8522 (JP)
(72) Inventor: ARAMOTO Masafumi, Osaka 545-8522 (JP); NAOE, Hirokazu, Osaka 545-8522 (JP)
(74) Representative: Müller - Hoffmann & Partner
(86) International application number: PCT/JP2010/069704
(87) International publication number: WO 2011/055787

(57) **Abstract**

A control station apparatus is set with a path for performing communication of a plurality of flows with a mobile station apparatus by way of a transfer path of a first access network. When receiving a position register request for performing communication via a transfer path of a second access network, from the mobile station apparatus, the control station apparatus, in response to the position register request, out of flows included in requested communication, switches the transfer path of a flow that is determined not to be permitted to hand over the transfer path, and continues the communication via the first access network, for a flow that is determined not to be permitted to hand over the transfer path. As a result, a mobile communication system or the like is provided, which can perform handover control such as to enable communication of emergency calls via one of the access networks while performing communication of general calls without limitation via the other access network, in accordance with the operator's policy.

## Description

### Technical Field

The present invention relates to a control station apparatus which is set with a path for performing communication of a plurality of flows with a mobile station apparatus connectable to, a first access network in which a bearer transfer path that guarantees a predetermined QoS has been established, and a second access network in which a transfer path different from the first access network has been established, by way of the transfer path of the first access network, and the like.

### Background Art

Conventionally, in mobile communication systems, there have been various known techniques to control the handover of a mobile station between different networks (e.g., between a 3GPP standard network and a WLAN, or the like).

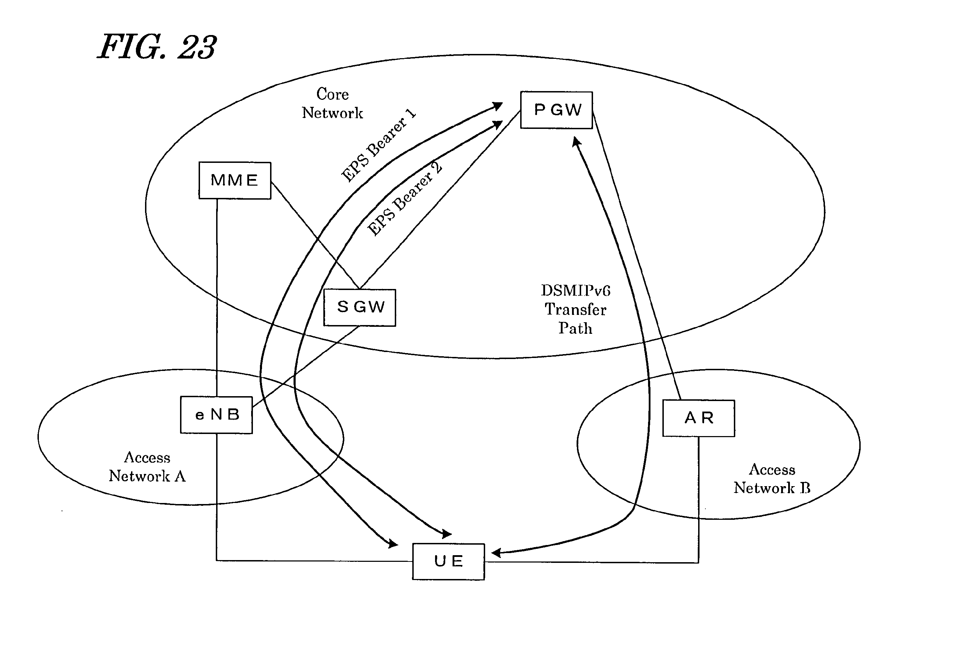

Mobile control (handover) in the conventional mobile communication networks is defined in non-patent document 1 and non-patent document 2, for example. Now, a conventional mobile communication system will be described with reference to FIG. 23. A mobile communication system in FIG. 23 is a mode of a mobile communication system described in non-patent document 1.

In the mobile communication system in FIG. 23, a plurality of access networks (access network A, access network B) are connected to a core network. A UE (User Equipment; mobile station) is also connected to the core network via an access network. The UE is connectable to the core network by way of either access network A or access network B.

Here, access network A is a communication path for which QoS can be set, for example a network defined by the 3GPP standard. Provided for access network A is an eNB (base station) to which the UE is connected. The UE is connected to the core network via the eNB and a gateway the SGW (Serving GW).

Further, a PGW (Packet Data Gateway: control station) forwarding communication data to the UE is installed in the core network. The PGW is connected to access network A via the SGW.

Further, provided for the core network is a MME (Mobility Management Entity: management station) which receives a request for transfer path establishment from the UE and takes control of the procedure of establishing an EPS bearer as a transfer path between the UE and the PGW via the eNB and the SGW. The EPS bearer is a transfer path between the UE and the PGW by way of access network A.

On the other hand, access network B is provided with an AR (Access Router) to which the UE connects, so that the UE is connected with the PGW in the core network via the AR by establishing a transfer path based on DSMIPv6 (Dual-Stack MIPv6) (see non-patent document 3 for example).

The UE is connected to the PGW by a transfer path, either the DSMIPv6 transfer path or the EPS bearer. A similar transfer path is established at a UE at the other communication end, so that communication between the UEs are performed using respective communication paths via the PGW.

Non-patent document 1 defines a handover procedure for the UE to continue communication by switching the communication path between the DSMIPv6 transfer path via access network B and the bearer transfer path via access network A.

Further, in recent years, there is a practice of an extension of establishing the DSMIPv6 transfer path via access network B and the bearer transfer path via access network A at the same time and switching between the two depending on the application (e.g., non-patent document 4).

The transmission capacity of the communication path in the conventional mobile communication system (packet communication system) was low in speed while there were no applications that essentially need broadband communication. Therefore, it was not necessary to perform complicated control such as providing for each application an individual communication path allotted with a bandwidth required for that application.

However, in recent years, applications have become diversified with the explosive spread of the internet. Various types have become general, such as WEB access, FTP and the like that do not need to secure a bandwidth which is equal or greater than the predetermined value, voice communication and the like that do not need a large bandwidth but need to have the least minimum bandwidth, and those, such as video distribution and others, that have difficulty in operation if a large bandwidth is not assured.

In non-patent document 2, when the UE that is performing communication by way of DSMIPv 6 transfer path via access network B performs a handover to access network A, it was necessary to establish a bearer as a communication path via access network A first and change all of communications that the UE is making, from the DSMIPv6 communication path to the bearer communication path at a time.

In non-patent document 4, it is possible to presume a situation in which the UE is performing a plurality of flows of communication through the DSMIPv6 communication path. A flow is a communication classification that can be identified based on the application or the party at the other end. For example, applications such as a voice communication and WEB access can be identified as different flows.

In conventional handovers, the communication paths of a UE and PGW were not controlled for flows, hence it was necessary to hand over all the flows of the UE by changing the communication paths all at once at the time of a handover. Specifically, when a handover is performed from a state in which a voice communication flow 'a' and a WEB access flow 'b' are being practiced through the DSMIPv6 transfer path, a bearer as a communication path via access network A is established first, then the communication paths for flow 'a' and flow 'b' are changed over in the UE and PGW from the DSMIPv6 transfer path to the bearer transfer path to achieve a handover. That is, the bearer communication path and the DSMIPv6 transfer path could not be held simultaneously.

However, in non-patent document 4, it has become possible to perform communication by selecting either the bearer communication path or the DSMIPv6 transfer path for each flow. Access network A and access network B can be constructed of different access networks, such as LTE (Long Term Evolution), radio LAN and the like, and these networks are different in transmission rate, presence or absence of QoS and other performance. On the other hand, applications are different in demanded transmission rate, necessity of QoS and other characteristics, depending on the property of each application. Therefore, the suited access network is different depending on the flow. Herein, a means of managing the transmission paths for flows is provided so that a handover procedure can be performed for each flow.

However, this handover procedure is carried out by the leadership of the UE, which makes a request for a handover. The UE designates the IP flow and selects the bearer communication path and DSMIPv6 transfer path to make a handover request. Accordingly, when the network operator determines to disallow this handover because of the network conditions, the network operator can and only needs to reject the request from the UE to prohibit the handover.

### Prior Art Documents

### Non-Patent Documents

Non-Patent Document 1: TS23.402 Architecture enhancements for non-3GPP accesses
Non-Patent Document 2: TS23.401 General Packet Radio Service (GPRS) enhancements for Evolved Universal Terrestrial Radio Access Network (E-UT RAN) access
Non-Patent Document 3: Mobile IPv6 Support for Dual Stack Hosts and Routers, draft-ietf-next-nemo-v4traversal-05.txt
Non-Patent Document 4: TS23.861 Multi access PDN connectivity and IP flow mobility

### Summary of the Invention

### Problems to be solved by the Invention

In the conventional mobile communication system (packet communication system) defined by non-patent document 1, it is possible to transmit/receive voice communication data. Further, in the voice communication, emergency call communication is supported.

An emergency call is presumed to be used at the time of emergency and at the time of disaster, and the operator is demanded to provide service, giving the highest priority to emergency call communication so as not to degrade the quality and interrupt the communication.

For this purpose, in the prior art the network operator used to limit general calls when enormous amounts of communication arise, for example at the time of disaster, so as to enable communication of as many emergency calls as possible. This means occurrence of a state in which other communications of UEs are not permitted in order to give priority to emergency calls in the communication inside the core network.

Even under such circumstances, if a network operator having a core network to which a plurality of radio access networks (e.g., radio access network A and radio access network B) connect, can operate its communication so as to direct communication for emergency calls to be performed via radio access network A that can assure communication paths of communication quality and direct communication other than these to be performed via communication paths based on radio access network B, in the conventional network the network operator can provide communication service by concentrating communication for emergency calls on the one access system while performing quality control in order to allow as many emergency calls as possible and can also provide communication without limiting general calls on the other access system.

In the prior art, a UE connects to a network by designating a service, and the IP address obtained at the time of connection is managed in association with the service. For example, a UE that establishes connection by requesting a voice call service performs communication of a voice call using the IP address obtained at the time of connection.

However, when the UE makes a handover request of a flow that distinguishes voice call communication including an emergency call and other general call, the only thing the management apparatus in the core network that receives the handover request could do was to reject or permit the handover as a single flow of voice communication without discrimination between emergency and general calls. Therefore, it is impossible for the operator to manage communication by distributing emergency calls and general calls to different access networks.

In view of the problems described above, it is therefore an object of the present invention to provide a mobile communication system in which handover control is carried out based on the operator's policy so that communication of emergency calls can be performed by a communication path via one of access networks while communication of general calls can be performed without limitation by the other access network.

Though the above description was illustrated taking an example in which emergency calls and general calls are distinguished and achieved via different access systems, the present invention enables a UE making a request for handover based on flow identification information including a plurality of flows, to perform communication by selecting a specific flow not limited to an emergency call and designate an access system.

### Means for Solving the Problems

In view of the above problems, a control station apparatus of the present invention is set with a path for performing communication of a plurality of flows with a mobile station apparatus connectable to, a first access network in which a bearer transfer path that guarantees a predetermined QoS has been established, and a second access network in which a transfer path different from the first access network has been established, by way of the transfer path of the first access network, includes: a flow determining means for determining whether handover of the transfer path of the flows should be permitted or not; and, a position register request receiving means for receiving a position register request for performing communication via the transfer path of the second access network, from the mobile station apparatus, and is characterized in that, out of the flows included in the communications requested by the position register request, in a flow in which transfer path is determined to be permitted to be handed off by the flow determining means, the transfer path is handed over to that through the second access network, whereas in a flow in which the transfer path is determined not to be permitted to be handed off, communication is continued through the first access network.

The control station apparatus of the present invention further includes a position register response transmitting means for transmitting a position register response that indicates the feasibility of position registering, to the mobile station apparatus, based on the position register request received by the position register request receiving means, and is characterized in that the position register response includes information on flows for which it is determined by the flow determining means that handover of the transfer path has not been permitted.

A mobile station apparatus of the present invention is a mobile station apparatus connectable to, a first access network in which a bearer transfer path that guarantees a predetermined QoS has been established, and a second access network in which a transfer path different from the first access network has been established, and set with a path for performing communication of a plurality of flows with a control station by way of the transfer path of the first access network, includes: a position register request transmitting means for transmitting a position register request for performing communication via the transfer path of the second access network; a position register response receiving means for receiving a position register response that indicates the feasibility of position registering, based on the position register request, from the control station apparatus; and, a transfer path switching means for switching the transfer path of the communication with the control station apparatus, based on the position register response received by the position register response receiving means, and is characterized in that the position register response includes information on a flow for which handover of the transfer path is not permitted, and the transfer path switching means causes the flows included in the position register response to communicate via the first access network and the other flows to communicate by switching the transfer path to the second access network.

A gateway apparatus of the present invention is a gateway apparatus which connects a mobile station apparatus connectable to, a first access network in which a bearer transfer path that guarantees a predetermined QoS has been established, and a second access network in which a transfer path different from the first access network has been established, with a control station apparatus which is set with a path for performing communication of a plurality of flows with the mobile station apparatus by way of the transfer path of the first access network, by way of the transfer path of the second access network, and includes: a position register response receiving means for receiving a position register response that includes information on a flow for which handover of the transfer path is not permitted, from the control station apparatus; and a position register response transmitting means for transmitting the position register response to the mobile station apparatus, by way of the transfer path of the second access network.

A mobile communication system of the present invention includes: a mobile station apparatus connectable to, a first access network in which a bearer transfer path that guarantees a predetermined QoS has been established, and a second access network in which a transfer path different from the first access network has been established; and a control station apparatus which is set with a path for performing communication of a plurality of flows by way of the transfer path of the first access network, and is characterized in that the control station apparatus includes: a flow determining means for determining whether handover the transfer path of the flows should be permitted or not; and, a position register request receiving means for receiving a position register request for performing communication via the transfer path of the second access network, from the mobile station apparatus, and, of the flows included in the communications requested by the position register request, in a flow in which transfer path is determined to be permitted to be handed off by the flow determining means, the transfer path is handed over to that through the second access network whereas in a flow in which the transfer path is determined not to be permitted to be handed off, communication is continued through the first access network.

A communication method of the present invention is a communication method in a mobile communication system comprising: a mobile station apparatus connectable to, a first access network in which a bearer transfer path that guarantees a predetermined QoS has been established, and a second access network in which a transfer path different from the first access network has been established; and a control station apparatus which is set with a path for performing communication of a plurality of flows by way of the transfer path of the first access network, and is characterized in that the control station apparatus determines whether handover of the transfer path of the flows shouldbepermittedornot, receives a position register request forperformingcommunicationvia the transfer path of the second access network, from the mobile station apparatus, and switches the transfer path to that through the second access network in a flow in which transfer path is determined to be permitted to be handed off, out of the flows included in the communications requested by the position register request, and continues communication through the first access network for a flow that is determined not to be permitted to be handed off.

### Effect of the Invention

According to the present invention, a control station apparatus or the like which is set with a path for performing communication of a plurality of flows with a mobile station apparatus connectable to, a first access network in which a bearer transfer path that guarantees a predetermined QoS has been established, and a second access network in which a transfer path different from the first access network has been established, by way of the transfer path of the first access network, receives a position register request for performing communication via the transfer path of the second access network, from the mobile station apparatus, and switches the transfer path to that through the second access network in a flow in which transfer path is determined to be permitted to be handed off by the control station apparatus, out of the flows included in the communications requested by the position register request, and continues communication through the first access network for a flow that is determined not to be permitted to be handed off.

Accordingly, it becomes possible for the network operator, for example to specify that communication for which the transfer path of emergency calls or the like is switched (handed over) should be prohibited, hence making it possible to perform communication by using different transfer paths between general calls and emergency calls. As a result, it is possible to achieve such operation as to perform communication for general calls while securing communication of emergency calls, for example with QoS guaranteed.

### Brief Description of the Drawings

[FIG. 1] is a diagram for illustrating an overall mobile communication system in the first embodiment.
[FIG. 2] is a diagram for illustrating a functional configuration of a UE in the first embodiment.
[FIG. 3] is a diagram for illustrating one example of data configurations in a connection management table in the first embodiment.
[FIG. 4] is a diagram for illustrating a functional configuration of a PGW in the first embodiment.
[FIG. 5] is a diagram for illustrating one example of data configurations in a handover policy management table in the first embodiment.
[FIG. 6] is a diagram for illustrating the flow of a communication path establishing procedure in the first embodiment.
[FIG. 7] is a diagram for illustrating a handover procedure in the first embodiment.
[FIG. 8] is a flow chart for illustrating a handover feasibility decision process in the first embodiment.
[FIG. 9] is a diagram for illustrating a procedure entailing a handover feasibility decision process in the first embodiment.
[FIG. 10] is a diagram for illustrating an overall mobile communication system in the second embodiment.
[FIG. 11] is a diagram for illustrating a functional configuration of a UE in the second embodiment.
[FIG. 12] is a diagram for illustrating one example of data configurations in a connection management table in the second embodiment.
[FIG. 13] is a diagram for illustrating a functional configuration of a PGW in the second embodiment.
[FIG. 14] is a diagram for illustrating a functional configuration of a GW in the second embodiment.
[FIG. 15] is a diagram for illustrating a handover procedure in the second embodiment.
[FIG. 16] is a diagram for illustrating a procedure entailing a handover feasibility decision process in the second embodiment.
[FIG. 17] is a diagram for illustrating an overall mobile communication system in the third embodiment.
[FIG. 18] is a diagram for illustrating a functional configuration of a UE in the third embodiment.
[FIG. 19] is a diagram for illustrating one example of data configurations in a connection management table in the third embodiment.
[FIG. 20] is a diagram for illustrating a functional configuration of a GW in the third embodiment.
[FIG. 21] is a diagram for illustrating a handover procedure in the third embodiment.
[FIG. 22] is a diagram for illustrating a procedure entailing a handover feasibility decision process in the third embodiment.
[FIG. 23] is a diagram for illustrating an overall mobile communication system in the prior art.

### Mode for Carrying Out the Invention

Next, the best mode for carrying out the present invention will be described with reference to the drawings. The present embodiment will be described in detail using drawings, taking an example of a mobile communication system to which the present invention is applied.

### [1. The first embodiment]

To being with, the first will be described.

### [1.1 Network Configuration]

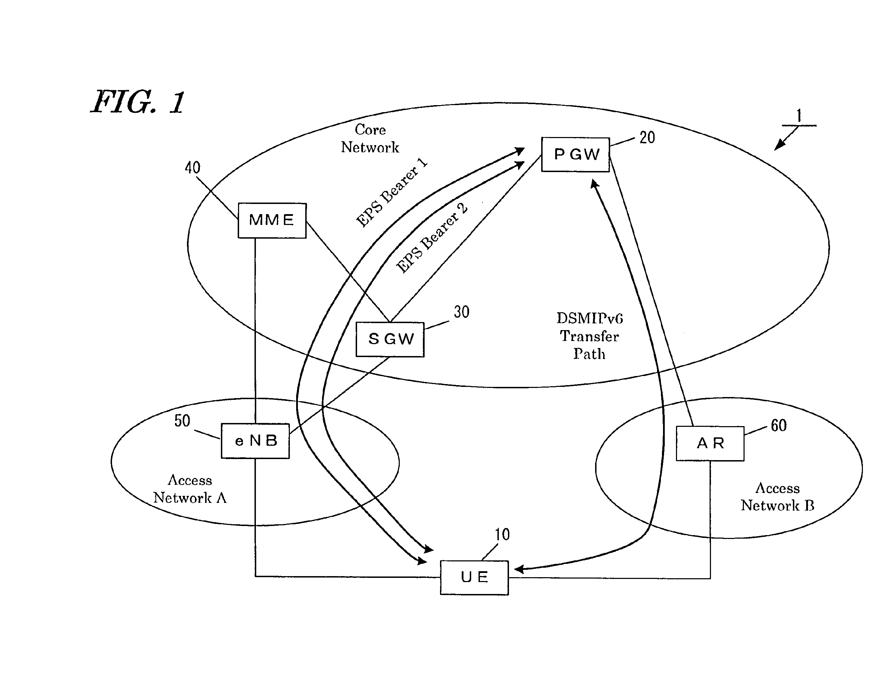

To begin with, the network configuration in the present embodiment will be described with reference to FIG. 1. FIG. 1 is a diagram for illustrating the overall scheme of a mobile communication system 1 when the present invention is applied. As shown in this figure, in the mobile communication system, an access network A and an access network B are connected to a core network. Here, access network A and access network B are assumed to be different networks; for example, access network A is assumed to be a 3GPP standardized network while access network B is assumed to be a non-3GPP network (e.g., DSMIPv6) as an example.

First, a UE 10 (mobile station: User Equipment) is connected to the core network via a plurality of radio access networks. Access network A includes a base station (eNB 50) to which UE 10 connects and is connected to the core network via a gateway (SGW 30).

The core network is installed with a control station apparatus, or GW (PGW 20) that forwards communication data transmitted from other mobile stations to a mobile station and is connected to SGW 30. Further, the core network is installed with a management apparatus (MME 40) that receives a request for transfer path establishment from UE 10 and takes control of the procedure for establishing a bearer (EPS bearer) as a transfer path between UE 10 and PGW 20 via eNB 50 and SGW 30. The EPS bearer is a QoS-supporting transfer path between UE 10 and PGW 20 by way of access network A.

Access network B is installed with an access router (AR 60) to which the UE connects, so that UE 10 is connected with PGW 20 in the core network via AR 60 by establishing a transfer path based on DSMIPv6.

Access network A is, for example a LTE (Long Term Evolution) as a radio access network that is defined by 3GPP as a communication standardization organization for mobile phone networks. Access network B is an access network such as a radio LAN, WiMAX or the like. Further, the core network is based on SAE (System Architecture Evolution) defined by 3GPP, described in non-patent document 1.

As above, in the mobile communication system 1 using packet communication in the present embodiment, UE 10 is connected to the core network by the transfer path of the bearer that supports QoS via access network A and by the transfer path based on DSMIPv6 via access network B.

### [1.2. Equipment Configurations]

Subsequently, each apparatus configuration will be briefly described with reference to the drawings. Here, SGW 30, MME 40, eNB 50 and AR 60 have the same configurations as those of the conventional equipment in SAE, so that detailed description is omitted.

### [1.2.1 UE Configuration]

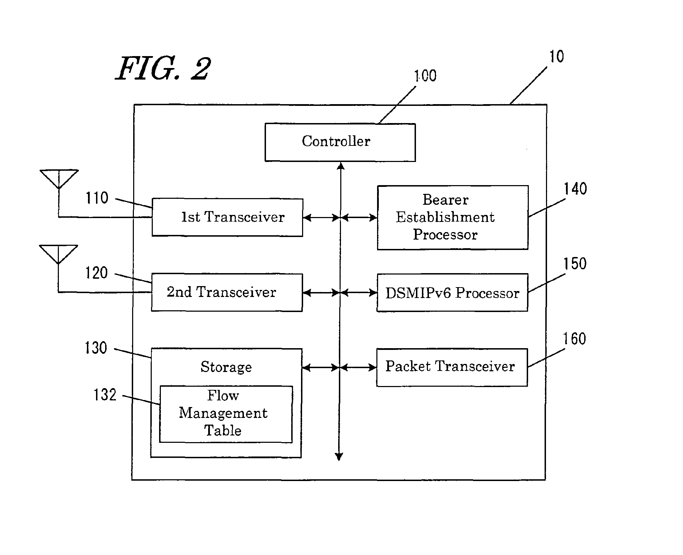

First, the configuration of UE 10 as a mobile station will be described using a block diagram in FIG. 2. Here, as a specific example of UE 10, a terminal such as mobile terminal, PDA or the like, which simultaneously connects to the core network via a plurality of access networks, is supposed.

As shown in FIG. 2, UE 10 includes a controller 100, to which a first transceiver 110, a second transceiver 120, a storage 130, a bearer establishment processor 140, a DSMIPv6 processor 150 and a packet transceiver 160 are connected.

Controller 100 is a functional unit for controlling UE 10. Controller 100 reads out and executes various programs stored in storage 130 to realize different processes.

First transceiver 110 and second transceiver 120 are functional units for enabling UE 10 to access each access network. First transceiver 110 is the functional unit for connection to access network A and second transceiver 120 is the functional unit for connection to access network B. Connected to first transceiver 110 and second transceiver 120 are external antennas, respectively.

Storage 130 is a functional unit for storing programs, data, etc., necessary for UE 10 to perform various kinds of operations. Storage 130 further stores a flow management table 132 for storing flow identification information for identifying applications in association with transfer paths for transmission. This flow management table 132 is referred to when packet transceiver 160 transmits data so as to select a transfer path for each flow, whereby the data is transmitted from the transceiver corresponding to the transfer path.

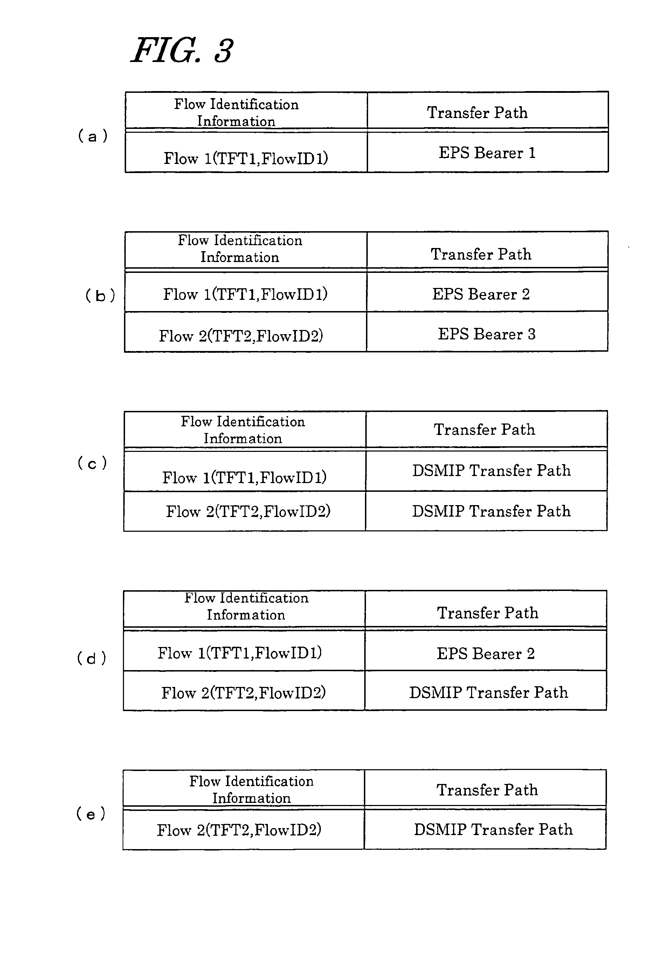

Here, FIG.3(a) shows one data configuration example of the flow management table. As shown in FIG.3(a), flow identification information (e.g., "flow 1 (TFT1, FlowID1)" is stored in association with a transfer path (e.g., "EPS bearer 1"). The flow identification information is information based on which an application is identified and uses a TFT (Traffic Flow Template) composed of an IP address, a port number and a protocol number and the like. It is also possible to use flow IDs as flow identification information when UE 10 and PGW 20 have shared flow IDs for identifying TFTs in advance.

Bearer establishment processor 140 is a functional unit that executes a process for establishing an EPS bearer as a communication path to PGW 20 via access network A, by way of SGW 30.

DSMIPv6 processor 150 is a functional unit for establishing a transfer path based on DSMIPv6 to connect to the core network via access network B. Packet transceiver 160 is a functional unit that transmits and receives specific data (packets). The unit decomposes the data received from the upper layer into packets and transmit them. The unit also realizes a function of transferring received packets to the upper layer.

### [1.2.2 PGW Configuration]

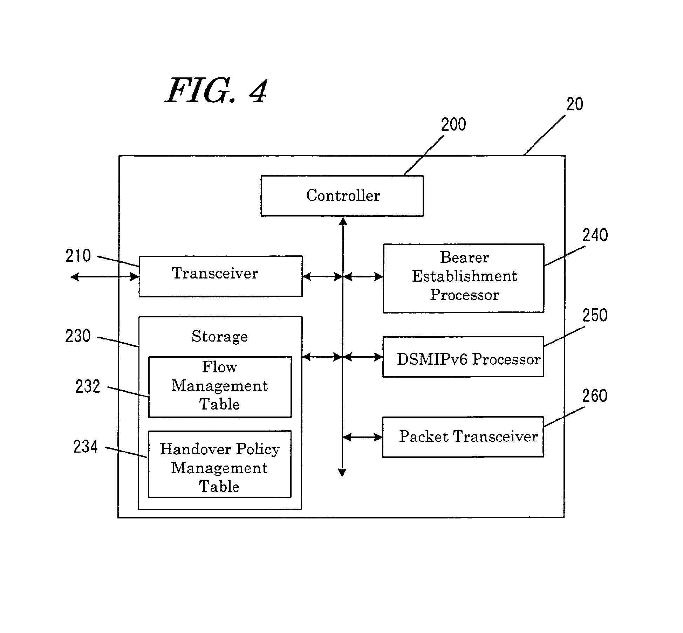

Next, the configuration of PGW 20 in the present embodiment will be described based on FIG. 4. PGW 20 includes a controller 200, to which a transceiver 210, a storage 230, a bearer establishment processor 240, a DSMIPv6 processor 250 and a packet transceiver 260 are connected.

Controller 200 is a functional unit for controlling PGW 20. Controller 200 reads out and executes various programs stored in storage 230 to realize different processes.

Transceiver 210 is a functional unit that is wired to a router or a switch to transmit and receive packets. For example, this unit performs transmission and reception using Ethernet (registered trademark) or the like that is usually used as a network connecting system.

Storage 230 is a functional unit for storing programs, data, etc. , necessary for PGW 20 to execute various operations. Storage 230 further stores a flow management table 232 for storing flow identification information for identifying applications in association with transfer paths for transmission and a handover policy management table 234 that defines operator's handover policy. Flow management table 232 is referred to when packet transceiver 260 transmits data so as to select a transfer path for each flow, whereby the data will be transmitted from the transceiver corresponding to the transfer path.

Here, FIG. 3 (a) shows one data configuration example of the flow management table. As shown in FIG.3(a), flow identification information (e.g., "flow 1 (TFT1, FlowID1)" is stored in association with a transfer path (e.g., "EPS bearer 1"). The flow identification information is information based on which an application is identified and uses a TFT (Traffic Flow Template) composed of an IP address, a port number and a protocol number and the like. It is also possible to use flow IDs as flow identification information when UE 10 and PGW 20 have shared flow IDs for identifying TFTs in advance.

Handover policy management table 234 is a management table for associating a specific flow with an access network (transfer path) for permitting transmission/reception of communication data corresponding to that flow.

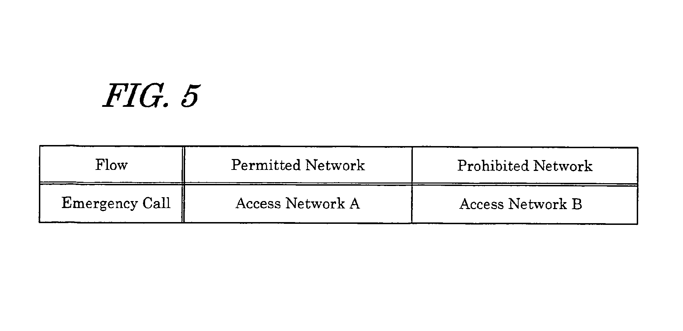

FIG. 5 shows one data configuration example of handover policy management table 234. As shown in FIG. 5, an application (flow) (e.g., "emergency call") is associated with an access network that permits or prohibits communication of the application (e.g., "access network A" as a permitting network and "access network B" as a prohibiting network).

Here, the application may be identified as a specific flow based on the aforementioned flow identification information, or may be identified based on existing QoS information such as ARP (Allocation and Retention Priority) or the like that represents priority of the communication, not limited to the flow identification information. Accordingly, it is possible in handover policy management table 234 to control permission/prohibition of communication access in accordance with the flow identification information or control permission/prohibition of communication access in accordance with the QoS level.

PGW 20 has held correlation of TFTs and/or ARPs with applications beforehand. Accordingly, it is possible to solve if an application corresponds to an emergency call, using TFTs and/or ARPs held in handover policy management table 234.

Further, though the present embodiment is described taking an example in which handover policy management table 234 that reflects the operator's policy has been configured in advance in PGW 20, the operator' s policy may be dynamically configured in PGW 20 by information notice from an external apparatus (e.g., PCRF (Policy and Charging Rules Function) or the like), not limited to the above.

Bearer establishment processor 240 is a functional unit that executes a process for establishing an EPS bearer as a communication path to UE 10 via access network A, by way of SGW 30.

DSMIPv6 processor 250 is a functional unit for establishing a transfer path based on DSMIPv6 to connect to UE 10 via access network B. Packet transceiver 260 is a functional unit that transmits and receives specific data (packets).

### [1.3. Communication Path Establishment Procedure]

Next, in the network shown in FIG. 1, the procedure of establishing a communication path when UE 10 connects to the core network via access network A, and the procedure of establishing a communication path when the UE connects to the core network via access network B will be described.

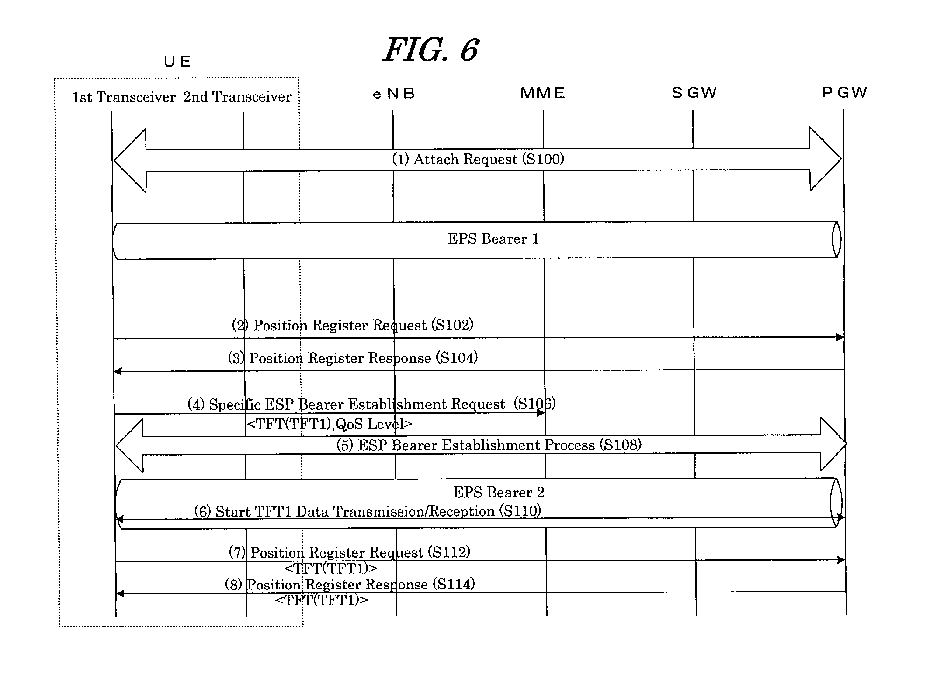

To begin with, the steps of establishing a communication path when the UE connects to the core network via access network A will be described using FIG. 6.

(1) UE 10 performs an attach procedure, following the conventional method (S100). Specifically, UE 10 transmits an attach request to MME 40. The attach request includes the identification information of UE 10 to have UE 10 authorized and permitted to access. This also includes an access point name (APN) for identifying PGW 20 to be connected. Further, the access point name selects PGW 20 and also corresponds to the service UE 10 requests. For example, UE 10 performs an attach procedure, using an access point name corresponding to a voice communication service.

MME 40 having received the attach request executes processes of authentication and access permission by the procedures with UE 10 and eNB 50, following the conventional method. MME 40 performs authentication and gives access permission based on the subscriber identification information etc. of UE 10 included in the attach information.

MME 40 executes a process of establishing a default EPS bearer (EPS bearer 1) for UE 10 that was permitted to access. The procedure is performed following the conventional procedure, by transmitting/receiving control messages between UE 10, eNB 50, MME 40, SGW 30 and PGW 20.

MME 40 having received the attach request transmits a default EPS bearer establishment request to PGW 20. PGW 20, as receiving the default EPS bearer establishment request, executes a process of establishing an EPS bearer (EPS bearer 1). Here, the default EPS bearer is a transfer path that is not the one which satisfies the QoS level required by the communication data (flow) of a particular application but is the one which enables communication between UE 10 and PGW 20.

(2) After establishment of the default EPS bearer (EPS bearer 1), UE 10 transmits a position register request based on DSMIPv6 to PGW 20 (S102). The message includes the identification information of UE 10, HoA (Home Address) of UE 10 and CoA (Care-of-Address) as positional information.

(3) PGW 20 transmits a position register response to UE 10 to complete the position registering process of DSMIPv6 (S104).

Herein, as defined in the conventional SAE, if the connection via access network A is a connection to the home link based on DSMIPv6, the position register procedure of DSMIPv6 described at S102 and S104 in FIG. 6 may be omitted.

Thereafter, UE 10 establishes a specific EPS bearer (EPS bearer 2) as a transmission path supporting the QoS for performing a voice call via access network A. The specific EPS bearer is a transfer path that enables communication between UE 10 and PGW 20 and is a transfer path that guarantees the QoS level required by UE 10.

(4) After establishment of the default EPS bearer, UE 10 transmits a specific EPS bearer establishment request to MME 40 in order to establish a communication path for performing a specific communication (S106).

Here, the message includes the flow identification information and QoS level, as the information associated with the flow using the specific EPS bearer as a communication path. The flow identification information is information that enables the application to be identified, and may use a TFT (Traffic Flow Template) composed of an IP address, a port number and a protocol number and the like.

It is also possible to use flow IDs as flow identification information when UE 10 and PGW 20 have shared flow IDs for identifying TFTs in advance. With this arrangement, UE 10 notifies the flow using the specific EPS bearer to be established as a communication path and the QoS level (the QoS level guaranteed for the flow). In the present embodiment, "TFT1" is designated as the TFT included in the flow identification information. TFT1 is the flow identification information for identifying emergency call communication.

This request from UE 10 is a request for establishing a specific EPS bearer for making an emergency call, for example, and is not made in link with the completion of the position register process DSMIPv6 (S102 and S104 in FIG. 6) after establishment of the default EPS bearer, but is transmitted when the user transmits an emergency call or at other occasions.

(5) MME 40 receives the specific bearer establishment request from UE 10 and executes an establishment process of a specific EPS bearer (EPS bearer 2) (S108).

The procedure is performed following the conventional procedure, by transmitting the specific EPS bearer establishment request from MME 40 to PGW 20, followed by transmission and reception of control messages between UE 10, eNB 50, MME 40, SGW 30 and PGW 20 to execute an EPS bearer establishment process.

(6) Then, PGW 20 and UE 10 start transmission and reception of communication data of the emergency call through the established specific EPS bearer (S110). The communication data of this voice call can be communicated with the QoS quality maintained without distinction between an emergency call and a general call other than that.

Further, it is possible for UE 10 to establish a specific EPS bearer in the same manner, not limited for an emergency call but for a communication that needs specific quality. Accordingly, UE 10 can establish a plurality of specific EPS bearers for flows. For example, the EPS bearer for an emergency call and the EPS bearer for a general call can be established separately.

Further, UE 10 can perform communication using the default EPS bearer (EPS bearer 1) as a transfer path, for a communication that does not need a specific quality.

Accordingly, communication such as, for example, a WEB access and the like can be performed using EPS bearer 1 as the transfer path while communication for an emergency call can be performed using EPS bearer 2 as the transfer path. UE 10 further establishes a specific EPS bearer (e.g., EPS bearer 3) so that communication of general calls other than emergency calls can be performed using EPS bearer 3 as the transfer path.

(7) UE 10 transmits a position register request defined in DSMIPv6 to PGW 20 (S112). The message includes the identification information of UE 10, HoA of UE 10 and CoA as positional information. Further, the position register request is transmitted with information identifying the flow. In the present embodiment, "TFT1" is designated as the TFT included in the flow identification information.

(8) PGW 20 receives the position register request defined in DSMIPv6 and transmits a position register response to UE 10 (S114). Though an example where communication using EPS bearer 2 as the transfer path between UE 10 and PGW 20 is started at S110 in FIG. 6 after establishment of the specific EPS bearer, is illustrated, transmission and reception of TFT1 data may be started as S110 at the point of the position register response at S114 while the EPS bearer establishment process at S108 is kept to establishment of EPS bearer 2 only.

UE 10 updates flow management table 132 by the above procedure. In flow management table 132, the established EPS bearers are managed in association with flow identification information. For example, as shown in FIG. 3(b), "TFT1" as the flow identification information that identifies the emergency call is associated with EPS bearer 2 that has been established for an emergency call. When EPS bearer 3 has been established for a general call other than the emergency call, EPS bearer 3 is managed in association with the flow identification information (e.g., "TFT2") that identifies a general call.

Similarly, in PGW 20 flow management table 232 is updated. In flow management table 232, the established EPS bearers are managed in association with flow identification information. For example, as shown in FIG. 3(b), "TFT1" as the flow identification information that identifies the emergency call is associated with EPS bearer 2 that has been established for an emergency call. When EPS bearer 3 has been established for a general call other than the emergency call, EPS bearer 3 is managed in association with the flow identification information (e.g., "TFT2") that identifies a general call.

By the above procedure, UE 10 can establish connection and perform communication via access network A.

Further, the above embodiment was described taking a procedure example in which UE 10 transmits a specific EPS bearer establishment request at S106 in FIG. 6, then an EPS bearer is established at S108. However, establishment of a specific EPS bearer may be performed in another order.

For example, while an emergency call communication maybe started through the EPS bearer 1 that has been established after the attach procedure (S100), an apparatus (e.g., PGW 20) in the core network may detect the progress of the emergency call communication from the content of the communication and start an EPS bearer establishment process (S108). In this case, UE 10 does not need to transmit a specific EPS bearer establishment request (S106).

Further, in the same manner, in other communications except emergency call communication, an apparatus (e.g., PGW 20) in the core network can start an EPS bearer establishment process (S108) by detecting the start of a specific communication.

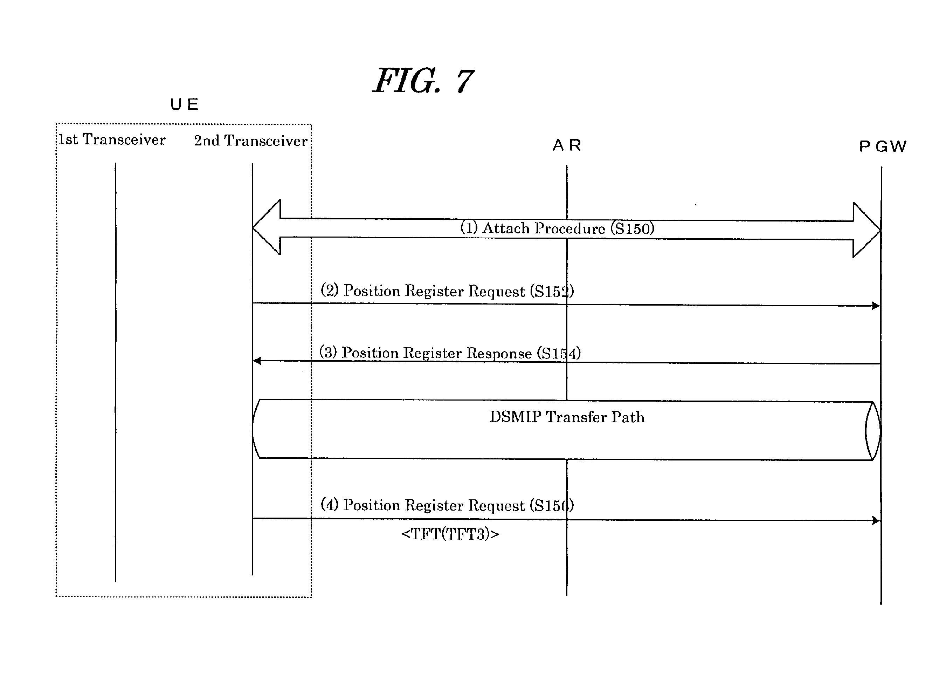

Referring next to a sequence diagram in FIG. 7, the procedures of UE 10, AR 60 and PGW 20 when UE 10 connects to the core network via access network B to establish a DSMIPv6 communication path, will be described. Here, UE 10 performs the procedure by transmitting and receiving control information by means of second transceiver 120 in order to connect to access network B.

(1) First, UE 10 performs an attach procedure via access network B (S150). The attach procedure is performed by the conventional connecting procedure based on DSMIPv6.

As a specific example, UE 10 first performs an authentication procedure for acquiring a local IP address from access network B. The procedure is executed by the combination of the procedure between UE 10 and AR 60 and the procedure between AR 60 and PGW 20. AR 60 is installed in the coverage area for UE 10, and is the AR that UE 10 connects. PGW 20 is an entity that is selected based on the information previously held by UE 10. Authentication and access permission processes are performed by PGW 20 or AR 60, using the profiles such as the identification information of UE 10, the subscriber data, etc., based on the operator's policy.

Then, the UE 10 that has been authorized and permitted to access is assigned a local IP address by AR 60. The assigned local IP address is an IPv4 or IPv6 address, and is used as CoA (Care-of-Address) of DSMIPv6. The method of assignment is implemented based on DHCP that is widely used in the Internet or a stateless IP address assignment procedure.

A setup process for establishing security association for transmitting/receiving encrypted DSMIPv6 control messages between UE 10 and PGW 20 is implemented. This process is performed based on IKEv2, EAP or the like, following the conventional DSMIPv6 technique.

At this step, PGW 20 gives notice of an IPv6 Address or IPv6 network prefix to UE 10. UE 10 sets the assigned IPv6 address as HoA (Home Address). When a network prefix is assigned, HoA is generated based on that network prefix. By this procedure, UE 10 becomes able to perform a position registering process in safety, to PGW 20, using an encrypted control message.

(2) UE 10 transmits a position register request defined in DSMIPv6 to PGW 20 (S152). The message includes the identification information of UE 10, HoA of UE 10 and CoA as positional information. In the attach procedure at S150, it is also permitted not to perform address assignment. In this case, UE 10 can make a request for assignment of HoA, based on DSMIPv6 by this message.

(3) PGW 20 establishes a DSMIPv6 transfer path and transmits a position register response to UE 10 (S154). The position register response includes HoA and CoA. It is also possible to assign HoA in the form of IPv4 address, depending on the position register request at S152. Further, the UE having received the position register response also completes a transfer path establishment process.

By the procedure as above, UE 10 establishes a communication path by connecting via access network B. Here, the above description was made on a case where UE 10 performs connection via access network A and then performs connection via access network B. However, connection may be established by changing the order.

### [1.4. Handover Procedure]

Subsequently, the procedure of a case where communication of UE 10 is handed over from access network A to access network B will be described with reference to the drawings. In this case, UE 10 uses second transceiver 120 connecting to access network B to transmit and receive control information to achieve the procedure. Description will be given first with reference to FIG. 7. Description herein will be given on the assumption that UE 10 has already established a DSMIP transfer path by the above-described procedure.

(1) UE 10 transmits a position register request defined by DSMIPv6 to PGW 20 to make a request for handover (S156). The position register request is not included with individual TFTs (TFT1 and TFT2) for an emergency call and a general call, but is included with flow identification information that identifies voice calls including emergency calls and general calls, and transmitted.

Here, the flow identification information is information based on which an application is identified as stated above and uses a TFT (Traffic Flow Template) composed of an IP address, a port number and a protocol number and the like. TFT1 for an emergency call and TFT2 for a general call have approximately the same information. To distinguish between them, information factors such as QoS information of the TFT and the like can be used.

Accordingly, by indicating ANY or the like as the QoS information it is possible to provide flow identification information (TFT3) that identifies a voice call and comprehends TFT1 for an emergency call and TFT2 for a general call.

In other words, UE 10 that connects to the core network by an attach procedure in order to get a certain service can hold a TFT for the service including a plurality of flows for communication. As a result, it is no longer necessary to transmit handover requests by designating individual TFTs separately for an emergency call and a general call, hence it is possible to simplify the procedure.

At S156 (position register request (handover request)) in FIG. 7, UE 10 makes a request for handover of voice call service to PGW 20 by adding TFT3 as the flow identification information that identifies voice calls.

Also, UE 10 is able to transmit a position register request without adding any flow identification information as has been done conventionally when UE 10 requests handover of all the communications UE 10 are performing.

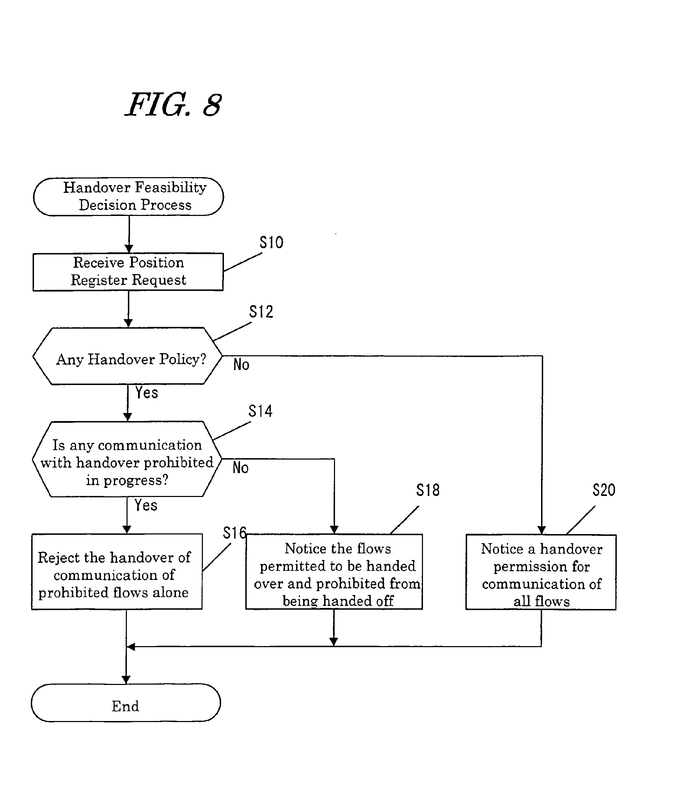

PGW 20 having received the position register request determines the feasibility of handover and transmits a position register response to UE 10. The determination of Hanover feasibility is performed by the handover feasibility decision process shown in FIG. 8, for example.

First, PGW 20 receives a position register request (Step S10). PGW 20 then refers to handover policy management table 234 to check the presence of a handover policy as to whether handover for a specific communication should be performed (Step S12). Here, examples of handover policy may include prohibition of handover to access network B for emergency call communication.

The operator can hold handover policy by dynamically updating handover policy management table 234 considering the network traffic and communication conditions. Herein, a handover policy that emergency call communication should be prohibited via access network B is held.

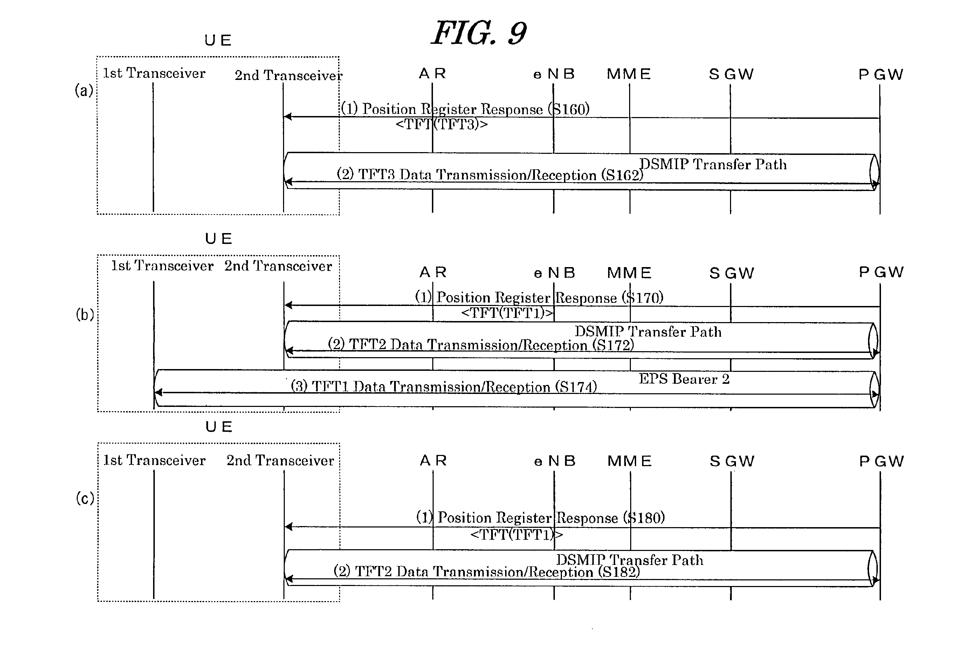

When there is no handover policy (Step S12; No), PGW 20 transmits a position register response to UE 10 as has been conventionally done to notify a handover permission (Step S20). The procedure in this case will be described with FIG. 9(a).

(1) PGW 20 transmits a position register response to UE 10 (S160). The position register response indicates permission of handover of the communication including all the flows of TFT3 as has been conventionally done.

(2) UE 10 and PGW 20 continue data transmission/reception by switching all the flows identified by TFT3 or all the voice communications to the DSMIP transfer path (S162).

As shown in FIG. 3(c), at the time of switching the transfer path UE 10 updates flow management table 132 so that the transfer path of the flow identified by TFT3 is changed to the DSMIP transfer path. Specifically, the transfer paths of emergency call (FTF1) and general call (TFT2), comprehended by voice communication (TFT3), are switched to the DSMIP transfer path. Similarly, as shown in FIG. 3(c), PGW 20 also updates flow management table 232 so that the transfer path of the flow identified by TFT3 is changed to the DSMIP transfer path.

Returning to FIG. 8, when there is a handover policy at Step S12 (Step S12; Yes), PGW 20 checks whether the communication identified by the flow identification information for which handover is requested includes a communication prohibited from being handed over, and whether the prohibited communication is being performed (Step S14).

For example, when a handover is requested by designating the flow identification information as a flow of a voice call, PGW 20 refers to the communication for which handover is prohibited in handover policy management table 234, and resultantly detects the fact that an emergency call is prohibited and also detects that the flows of the voice calls for which handover is requested include a flow that identifies an emergency call. Further, PGW 20 determines whether UE 10 is performing communication of an emergency call.

In order to determine whether communication of an emergency call is being engaged, it is possible to confirm that communication of an emergency call is being engaged by monitoring the actual traffic based on the flow identification information that identifies an emergency call, or it is also possible to check the fact that the EPS bearer for an emergency call (EPS bearer 2) has been established. Without regard to an emergency call, it is also possible to determine whether communication of a flow to be prohibited from being handed off is being performed, using the same technique.

When communication including a flow to be prohibited from being handed off is in progress (Step S14; Yes), PGW 20 notifies UE 10 of the rejection to the handover of the prohibited flow only (Step S16). The procedure in this case will be described with FIG. 9(b).

(1) PGW 20 transmits a position register response (notice of rejection of handover of an emergency call alone) to UE 10 to notify rejection of handover of the flow to be prohibited from being handed off and permission of handover of the other flows (S170). As an information factor in the position register response, information on the flow to be prohibited from being handed off is included and transmitted.

The information on the flow to be prohibited frombeing handed off may be flow identification information such as a TFT or the like, or may be information that identifies the transfer path such as an EPS bearer or the like. Specifically, when a flow of an emergency call in the present embodiment is prohibited, TFT1 that identifies the emergency call may be notified or EPS bearer 2 may be notified.

(2) UE 10 and PGW 20 continue communication (data transmission and reception) by switching the communication path for a flow permitted to be handed off from the EPS bearer to the DSMIP transfer path (S172).

Specifically, when UE 10 has performed communication via the EPS bearer for general calls that is identified by the flow identification information of TFT2, transmission and reception of data of TFT2 is switched to the DSMIP transfer path to continue data transmission and reception.

(3) UE 10 and PGW 20 do not perform handover for the flow for which handover was rejected, and continue communication (data transmission and reception) through the EPS bearer (S174). Specifically, UE 10 continues communication of the emergency call identified by the flow identification information of TFT1 through EPS bearer 2.

As shown in FIG. 3(d), at the time of switching the transfer path UE 10 updates flow management table 132 so that the transfer path of the flow for which handover is permitted is associated with "DSMIP transfer path". Specifically, the transfer path of emergency call (TFT1) that was rejected to be handed off is not changed while the transfer path for communication of other flows (e.g., general call (TFT2)) is switched to the DSMIP transfer path. Similarly, at the time of switching the transfer path, PGW 20 updates flow management table 232 so that the transfer path for the flows for which handover was permitted is changed to "DSMIP transfer path", as shown in FIG. 3(d).

Returning to FIG. 8, when no communication that is prohibited from being handed off is in progress (Step S14; No), PGW 20 gives a notice of handover permission to UE 10 and notifies information as to communication of flows to be prohibited from being handed off (Step S18). The flow in this case will be described with FIG. 9(c).

(1) PGW 20 transmits a position register response (notice of addition of an emergency call) to notify handover permission (S180). Here, as an information factor in the position register response, information on the communication of flows to be prohibited from being handed off is added. For example, it is notified that communication of an emergency call will not be performed through the DSMIP transfer path from this time on.

The information on the communication of the flow to be prohibited from being handed off may be flow identification information such as TFT or the like, or may be information that identifies the transfer path such as an EPS bearer or the like. Specifically, when a flow of an emergency call is prohibited in the present embodiment, TFT1 that identifies an emergency call may be notified or EPS bearer 2 may be notified.

(2) UE 10 and PGW 20 continue communication (data transmission and reception) by switching the communication path for a flow permitted to be handed off from the EPS bearer to the DSMIP transfer path (S182). Specifically, when UE 10 has performed communication via the EPS bearer for general calls that is identified by the flow identification information of TFT2, transmission and reception of data of TFT2 is switched to the DSMIP transfer path to continue the communication.

Thereafter, when UE 10 performs communication of a flow that is prohibited from being handed off, UE 10 performs communication by establishing a communication path via access network A.

As shown in FIG. 3(e), at the time of switching the transfer path UE 10 updates flow management table 132 so that the transfer path of the flow for which handover is permitted is changed to "DSMIP transfer path". Specifically, the transfer path of the communication (e.g., a general call (TFT2)) that was permitted at the handover request for a voice call (TFT3) is switched to the DSMIP transfer path. Similarly, at the time of switching the transfer path, PGW 20 updates flow management table 232 so that the transfer path for the flows for which handover was permitted is changed to "DSMIP transfer path", as shown in FIG. 3(e).

With the arrangement, by applying the operator's policy to the management apparatus in the core network, it become possible to make such operation that communication for emergency calls will be performed through access network A alone. This configuration is able to deal with the policy of an operator who schemes such operation as to have the communication for emergency calls performed via access network A and have the communication via access network B used for communication for general calls other than emergency calls, even though the communication path via access network B can, indeed, keep the quality for emergency call communication and permit handover from the communication path via access network A.

That is, the network operator is able to control hand over permission/permission for every flow or every bearer, in response to handover requests from UEs, in accordance with the operator's policy depending on the communication conditions within the network.

Though the present embodiment was described by assuming an emergency call as a specific communication to be prohibited from being handed off, the operator can define the specific communication in any form, not limited to the above. Further, the specific communication for which handover is prohibited is not limited to a single kind, but multiple kinds of communication can be specified.

### [2. The Second Embodiment]

Next, the second embodiment will be described in detail using diagrams.

### [2.1 Network Configuration]

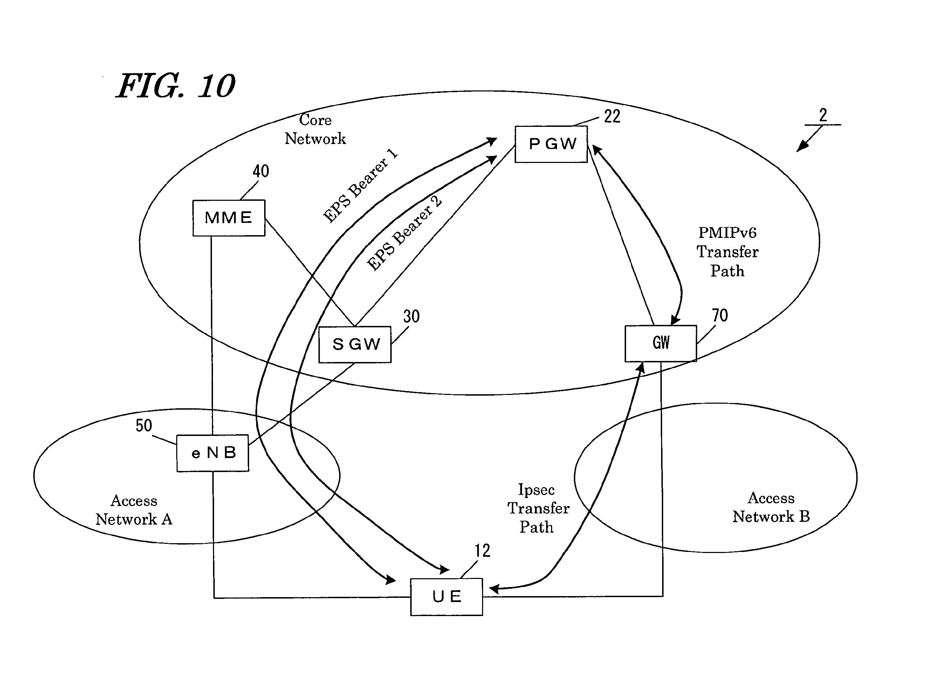

To begin with, the network configuration in the present embodiment will be described with reference to FIG. 10. FIG. 10 is a diagram for illustrating the overall scheme of a mobile communication system 2 when the present invention is applied. As shown in this figure, in the mobile communication system, an access network A and an access network B are connected to a core network. Here, access network A and access network B are assumed to be different networks; for example, access network A is assumed to be a 3GPP standardized network while access network B is assumed to be a non-3GPP network as an example.

The difference from mobile communication system 1 of the first embodiment is that the transfer path for access network B is established based on PMIPv6 in the present embodiment in contrast to that the transfer path of access network B in the first embodiment is established based on DSMIPv6.

This is attributed to the difference between mobility control techniques. In DSMIPv6 in the first embodiment, mobility control is carried out by UE 10 and PGW 20. In contrast to this, in PMIPv6 of the present embodiment, a GW 70 inside the network performs the mobility control function of a UE 12, instead of UE 12. Because of this proxy function, this mobility control function has been conventionally known as Proxy Mobile IPv6 (PMIPv6). This proxy function makes UE 12 become unnecessary to have a mobility control function, hence has the advantage of alleviating the processing load.

First, a UE 12 (mobile station: User Equipment) is connected to the core network via a plurality of radio access networks. Access network A includes a base station (eNB 50) to which UE 12 connects and is connected to the core network via a gateway (SGW 30).

The core network is installed with a GW (PGW 22) as a control station apparatus that forwards communication data transmitted from other mobile stations to a mobile station and is connected to SGW 30. Further, the core network is installed with a management apparatus (MME 40) that receives a request for transfer path establishment from UE 12 and takes control of the procedure for establishing a bearer (EPS bearer) as a transfer path between UE 12 and PGW 22 via eNB 50 and SGW 30. The EPS bearer is a QoS-supporting transfer path between UE 12 and PGW 22 by way of access network A.

Access network B is connected to the core network via a gate way apparatus (GW 70). Here, GW 70 that connects access network B with the core network is an apparatus inside the core network. UE 12 is connected with PGW 22 by a transfer path based on IPsec established between UE 12 and GW 70 and a transfer path based on PMIPv6 established between GW 70 and PGW 22.

Access network A is, for example a LTE (Long Term Evolution) as a radio access network that is defined by 3GPP as a communication standardization organization for mobile phone networks. Access network B is an access network such as a radio LAN, WiMAX or the like. Further, the core network is based on SAE (System Architecture Evolution) defined by 3GPP.

As above, in the mobile communication system using packet communication in the present embodiment, UE 12 is connected to the core network by the transfer path of the bearer that supports QoS via access network A and by the transfer path based on IPsec and the transfer path based on PMIPv6 via access network B.

### [2.2. Equipment Configurations]

Subsequently, each apparatus configuration will be briefly described with reference to the drawings. Here, SGW 30, MME 40 and eNB 50 have the same configurations as those of the conventional equipment in SAE, so that detailed description is omitted.

### [2.2.1 UE Configuration]

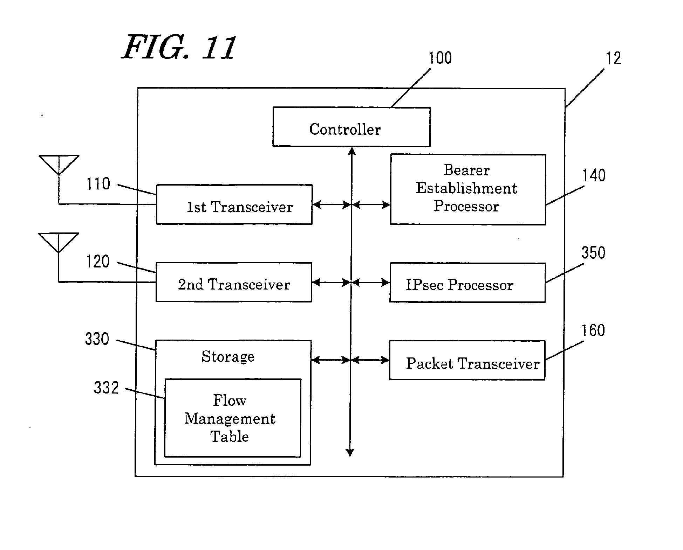

First, the configuration of UE 12 as a mobile station will be described using a block diagram in FIG. 11. Here, as a specific example of UE 12, a terminal such as mobile terminal, PDA or the like, which simultaneously connects to the core network via a plurality of access networks, is supposed. Here, in UE 12 in FIG. 11, the same components as those in UE 10 in FIG. 2 are allotted with the same reference numerals, and description of the functional parts allotted with the same reference numerals is omitted.

As shown in FIG. 11, UE 12 includes a controller 100, to which a first transceiver 110, a second transceiver 120, a storage 330, a bearer establishment processor 140, a IPsec processor 350 and a packet transceiver 160 are connected.

Similarly to storage 130, storage 330 is a functional unit for storing programs, data, etc., necessary for UE 12 to perform various kinds of operations. Storage 330 further stores a flow management table 332 for storing flow identification information for identifying applications in association with transfer paths for transmission.

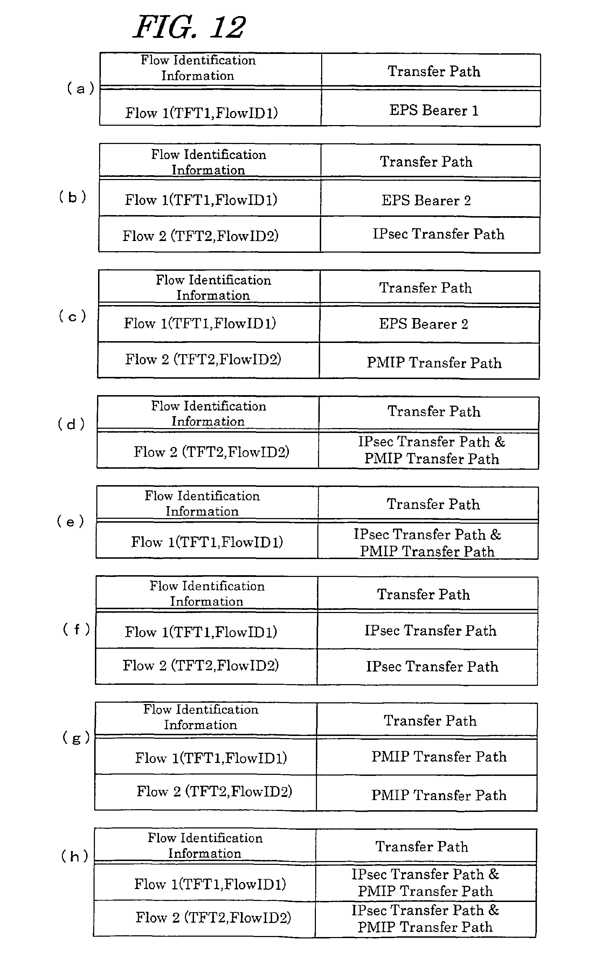

Here, FIG. 12 (a) shows one data configuration example of flow management table 332. As shown in FIG. 12(a), flow identification information (e.g., "flow 1 (TFT1, FlowID1)" is stored in association with a transfer path (e.g., "EPS bearer 1").

IPsec processor 350 is a functional part for establishing a transfer path based on IPsec that connects to the core network via access network B.

### [2.2.2 PGW Configuration]

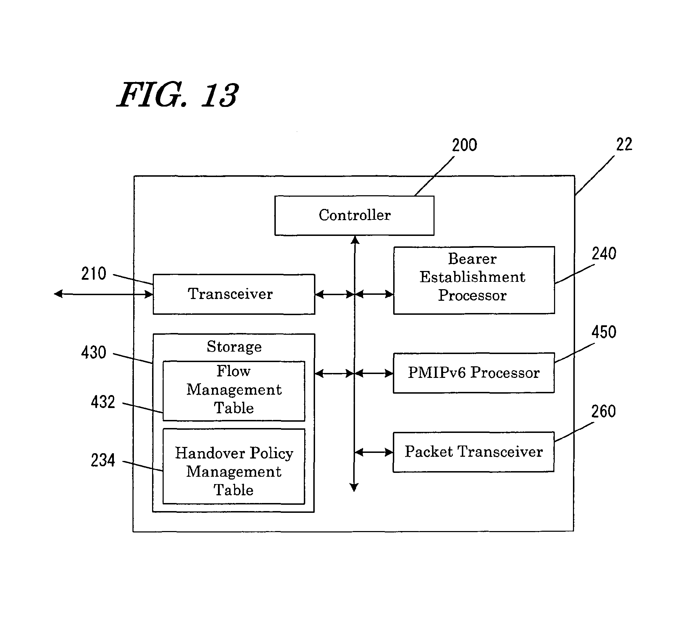

Next, the configuration of PGW 22 in the present embodiment will be described based on FIG. 13. Here, in PGW 22 in FIG. 13, the same components as those in PGW 20 in FIG. 4 are allotted with the same reference numerals, and description of the functional parts allotted with the same reference numerals is omitted.

PGW 22 includes a controller 200, to which a transceiver 210, a storage 430, a bearer establishment processor 240, a PMIPv6 processor 450 and a packet transceiver 260 are connected.

Similarly to storage 230, storage 430 is a functional unit for storing programs, data, etc., necessary for PGW 22 to execute various operations. Storage 430 further stores a flow management table 432 for storing flow identification information for identifying applications in association with transfer paths for transmission and a handover policy management table 234.

Here, FIG. 12 (a) shows one data configuration example of flow management table 432. As shown in FIG. 12(a), flow identification information (e.g., "flow 1 (TFT1, FlowID1)" is stored in association with a transfer path (e.g., "EPS bearer 1"). The flow identification information is information based on which an application is identified and uses a TFT (Traffic Flow Template) composed of an IP address, a port number and a protocol number and the like. It is also possible to use flow IDs as flow identification information when the UE and PGW have shared flow IDs for identifying TFTs in advance.

PMIPv6 processor 450 is a functional unit for establishing a transfer path based on PMIPv6 to connect to UE 12 via access network B.

### [2.2.3 GW Configuration]

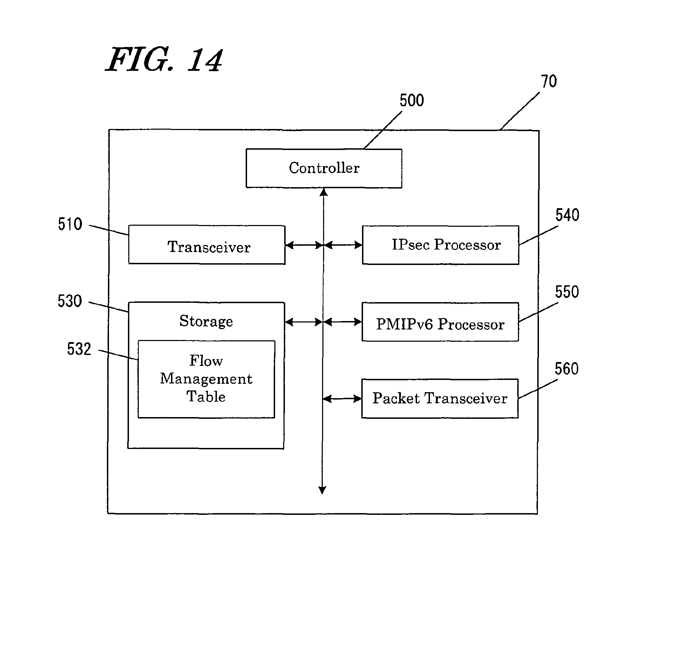

Next, the configuration of GW 70 in the present embodiments will be described based on FIG. 14. GW 70 includes a controller 500 to which a transceiver 510, a storage 530, an IPsec processor 540, a PMIPv6 processor 550 and a packet transceiver 560 are connected.

Controller 500 is a functional unit for controlling GW 70. Controller 500 reads out various programs stored in storage 530 and executes the programs to realize various processing.

Transceiver 510 is a functional unit that is wired to a router or a switch to transmit and receive packets. For example, this unit performs transmission and reception using Ethernet (registered trademark) that is usually used as a network connecting system, or the like.

Storage 530 is a functional unit for storing programs, data, etc., necessary for GW 70 to execute various operations. Storage 530 further stores a flow management table 532 for storing flow identification information for identifying applications in association with transfer paths for transmission. Flow management table 532 is referred to when packet transceiver 560 transmits data so as to select a transfer path for each flow, whereby the data is transmitted from the transceiver corresponding to the transfer path.

Here, FIG. 12 (e) shows one data configuration example of flow management table 532. As shown in FIG. 12 (e), a flow identification information (e.g., "flow 1" is stored in association with transfer paths (e.g., "IPsec transfer path and PMIP transfer path").

When having received a packet to UE 12 from PGW 22, GW 70 solves the IPsec transfer path from flow management table 532 and transmits the packet to UE 12. When having received a packet transmitted by UE 12 via the IPsec transfer path, GW 70 solves the PMIP transfer path from flow management table 532 and transmits the packet to PGW 22.

IPsec processor 540 is a functional part that executes a process for establishing a transfer path based on IPsec as the communication with UE 12.

PMIPv6 processor 550 is a functional part for establishing a transfer path based on PMIPv6 as the communication with PGW 22. Packet transceiver 560 is a functional part for transmitting and receiving specific data (packets).

### [2.3. Communication Path Establishment Procedure]

Next, in the network shown in FIG. 10, the communication path establishment procedure of UE 12 for connecting to the core network via access network A to establish a communication path is almost the same as the communication path establishment procedure explained in the first embodiment, so that detailed description is omitted.

The difference of the communication path establishment procedure of the present embodiment is that in the first embodiment UE 10 and PGW 20 perform the position register procedure based on DSMIPv6 (S102 and S104 in FIG. 6) after completion of the attach procedure at S100 in FIG. 6 and establishment of the default EPS bearer (EPS bearer 1) whereas in the present embodiment SGW 30 and PGW 22 perform the position register procedure based on PMIPv6 after completion of the attach procedure at S100 in FIG. 6 and establishment of the default EPS bearer (EPS bearer 1).

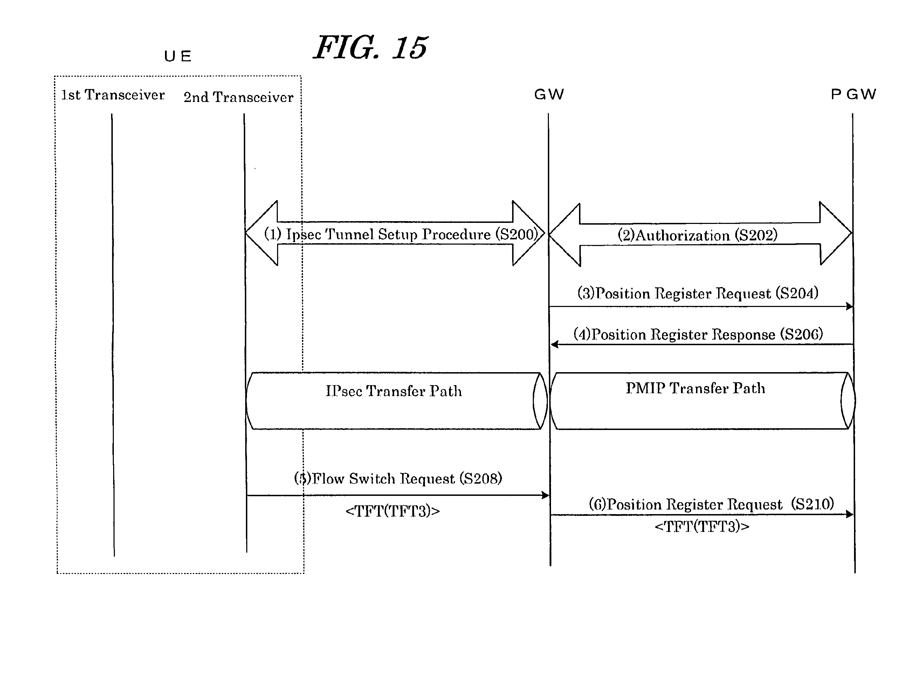

Referring next to a sequence diagram in FIG. 15, the procedures of UE 12, GW 70 and PGW 22 when UE 12 connects to the core network via access network B to establish a DSMIPv6 communication path, will be described. Here, UE 12 performs the procedure by transmitting and receiving control information by means of second transceiver 120 that connects to access network B.

(1) UE 12 performs an IPsec tunnel setup procedure via access network B (S200).

Specifically, UE 12 takes the lead in performing a procedure of setting up an IPsec tunnel in cooperation with GW 70. The setup of the IPsec tunnel is performed based on a key exchange procedure such as IKEv2 or the like, which has been conventionally used for an IPsec tunnel setup procedure. GW 70 that sets up an IPsec tunnel with UE 12 is an apparatus inside the core network that connects access network B with the core network. UE 12 detects GW 70 by using a DNS service or the like.

Further, in this procedure, UE 12 transmits a message included with an access point name (APN) for identifying PGW 22 to be connected to.

(2) GW 70 performs authorization and access permission procedures for UE 12 with PGW 22 to which UE 12 makes a request for connection by the time IPsec tunnel establishment is completed (S202). The authorization and access permission processes are performed by PGW 22 or GW 70, using the profiles such as the identification information of UE 12, the subscriber data, etc., in accordance with the operator's policy.

(3) When UE 12 has been authorized and permitted to access, GW 70 transmits a position register request defined by PMIPv6 to PGW 22 (S204). The message includes the identification information on UE 12, HoA of UE 12 and the GW 70's address as positional information.

(4) PGW 22 transmits a position register response to GW 70, based on PMIPv6 (S206). The position register response includes HoA and CoA. It is also possible to assign IPv4 HoA, depending on the request of (3) (request at S204). In this way, a PMIP transfer path is established between GW 70 and PGW 22.

By the procedure as above, UE 12 is connected via access network B to establish a communication path.

Here, the above description was made on a case where UE 12 performs connection via access networkAand then performs connection via access network B. However, connection may be established by changing the order.

### [2.4. Handover Procedure]

Subsequently, the procedure of a case where communication of UE 12 is handed over from access network A to access network B will be described with reference to FIG 8 and FIGS. 15 to 16. In this case, UE 12 uses second transceiver 120 connecting to access network B to transmit and receive control information to achieve the procedure.

Description will be given first based on FIG. 15. Here, UE 12 has already established an IPsec transfer path and PMIP transfer path by the above-described procedures. Further, description herein will be given on the assumption that UE 12 has already established a specific EPS bearer and is performing communication.

(5) UE 12 transmits a flow switch request to GW 70 to make a request for a handover (S208). The flow switch request is not included with individual TFTs (TFT1 and TFT2) for an emergency call and a general call, but is included with flow identification information that identifies voice calls including emergency calls and general calls, and transmitted.

Here, the flow identification information is information based on which an application is identified and uses a TFT (Traffic Flow Template) composed of an IP address, a port number and a protocol number and the like. TFT1 for an emergency call and TFT2 for a general call have approximately the same information. To distinguish between them, information factors such as QoS information of the TFT and the like can be used.

Accordingly, by indicating ANY or the like as the QoS information it is possible to provide flow identification information (TFT3) that identifies a voice call and comprehends TFT1 for an emergency call and TFT2 for a general call. Alternatively, the flow identification information may be a flow ID, similarly to the first embodiment.

In other words, UE 12 that connects to the core network by an attach procedure in order to get a certain service can hold a TFT for the service including a plurality of flows for communication. As a result, it is no longer necessary to transmit handover requests by designating individual TFTs separately for an emergency call and a general call, hence it is possible to simplify the procedure.

Also, when a request is made so that all the communications UE 12 is performing will be handed off, it is also possible for UE 12 to direct all the communications to be handed over, by not giving any flow identification information.

At the step of a flow switch request (S208) in FIG. 15, UE 12 makes a request for a handover of voice call service to GW 70 by adding TFT3 as the flow identification information that identifies a voice call.

(6) GW 70, as receiving the flow switch request from UE 12, transmits a position register request defined in PMIPv6 to PGW 22 so as to request handover (S210). The position register request includes the flow identification information that is included in the flow switch request, and is transmitted.

PGW 22 having received the position register request determines the feasibility of handover and transmits a position register response to UE 12. The determination of handover feasibility is performed by the handover feasibility decision process shown in FIG. 8, for example, similarly to the first embodiment.

When PGW 22 checks the presence of a handover policy and there is a handover policy (Step S12; Yes), PGW 22 checks whether the communication identified by the flow identification information for which handover is requested includes a communication prohibited from being handed off, and whether the prohibited communication is being performed (Step S14). For example, when a handover is requested by designating the flow identification information as a flow of a voice call, PGW 22 refers to the communication for which a handover is prohibited in handover policy management table 234, and resultantly detects the fact that an emergency call is prohibited and also detects that the flows of the voice call for which a handover is requested include a flow that identifies an emergency call. Further, PGW 22 determines whether UE 12 is performing communication of an emergency call.

In order to determine whether communication of an emergency call is being engaged, it is possible to confirm that communication of an emergency call is being engaged by monitoring the actual traffic based on the flow identification information that identifies an emergency call, or it is also possible to check the fact that the EPS bearer for an emergency call (EPS bearer 2) has been established. Without regard to an emergency call, it is also possible to determine whether communication of a flow to be prohibited from being handed off is being performed, using the same technique.

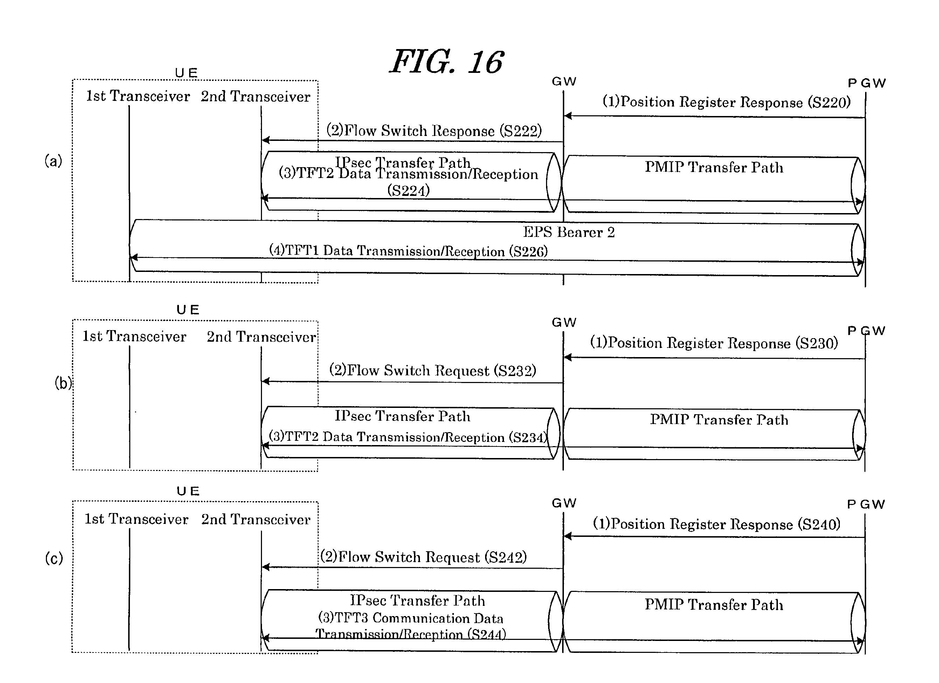

Here, the procedures effected at Steps S16, S18 and S20 in FIG. 8 will be described using FIG. 16.

### (a) The procedure at Step S16

First, the procedure at Step S16 will be described using FIG. 16(a) .

(a-1) PGW 22 transmits a position register response (notice of rejection of handover of an emergency call alone) to GW 70 to notify rejection of handover of the flow to be prohibited from being handed off and permission of handover of other flows (S220). As an information factor in the position register response, information on the flow to be prohibited from being handed off is included and transmitted.

The information on the flow to be prohibited from being handed off may be flow identification information such as TFT or the like, or may be information that identifies the transfer path such as an EPS bearer or the like. Specifically, when a flow of an emergency call in the present embodiment is prohibited, TFT1 that identifies an emergency call may be notified or EPS bearer 2 may be notified.

(a-2) GW 70 receives the position register response and transmits a flow switch response (notice of rejection of handover of an emergency call alone) to UE 12 (S222). The flow switch response includes information on the flow to be prohibited from being handed off included in the position register response, and is transmitted.

(a-3) UE 12 and PGW 22 continue communication (data transmission and reception) by switching the communication of a flow permitted to be handed off, from the EPS bearer to the IPsec transfer path and the PMIP transfer path (S224). Specifically, when UE 12 has performed communication via EPS bearer 3 for general calls that is identified by the flow identification information of TFT2, transmission and reception of data of TFT2 is switched to the communication through the IPsec transfer path between UE 12 and GW 70 and the PMIP transfer path between GW 70 and PGW 22.

(a-4) UE 12 and PGW 22 do not perform handover for the communication of the flow for which a handover was rejected, and continue communication (data transmission and reception) through the EPS bearer (S226). Specifically, UE 12 continues communication of the emergency call identified by the flow identification information of TFT1, through EPS bearer 2.

Along with this, flow management table 332 of UE 12 is updated so that the transfer path of the flow for which handover is permitted is associated with "IPsec transfer path" as shown in FIG. 12 (b) . Specifically, the transfer path of the flow identified by TFT2 is updated to "IPsec transfer path". As to the communication that was rejected to be handed off will not be updated. Accordingly, the transfer path for an emergency call identified by TFT1 is retained as "EPS bearer 2".

Further, flowmanagement table 432 of PGW 22 is updated so that the transfer path for the flow for which handover is permitted is associated with "PMIP transfer path" as shown in FIG. 12(c). Specifically, the transfer path of the flow identified by TFT2 is updated to "PMIP transfer path". As to the communication that was rejected to be handed off will not be updated. Accordingly, the transfer path for an emergency call identified by TFT1 is retained as "EPS bearer 2".

Further, flow management table 532 of GW 70 is updated so that the transfer path for the flow for which handover is permitted is associated with "IPsec transfer path and PMIP transfer path" as shown in FIG. 12(d). Specifically, the transfer path of the flow identified by TFT2 is updated to "IPsec transfer path and PMIP transfer path". GW 70 receives packets of TFT2 flow transmitted by UE 12 through the IPsec transfer path and transmits the packets to the PMIP transfer path by reference to flow management table 532. Further, GW 70 receives the packets of TFT2 flow transmitted from PGW 22 and addressed to UE 12 through the PMIP transfer path and transmits the packets to the IPsec transfer path by reference to flow management table 532.

### (b) The procedure at Step S18

Next, the procedure at Step S18 will be described using FIG. 16(b).

(b-1) PGW 22 transmits a position register response (notice of disapproval of emergency call) for notice of permission to GW 70 (S230). As an information factor in the position register response, information on the communication of flows to be prohibited from being handed off is added. For example, it is notified that communication of an emergency call will not be allowed through the PMIP transfer path from this time on.

The information on the communication of a flow to be prohibited from being handed off may be flow identification information such as TFT or the like, or may be information that identifies the transfer path such as an EPS bearer or the like. Specifically, when a flow of an emergency call in the present embodiment is prohibited, TFT1 that identifies an emergency call may be notified or EPS bearer 2 may be notified.

(b-2) GW 70 receives the position register response and transmits a flow switch response (notice of disapproval of emergency call) to UE 12 (S232). The flow switch response includes information on the flow to be prohibited from being handed off included in the position register response, and is transmitted.

(b-3) UE 12 and PGW 22 continue communication by switching the flow permitted to be handed off, from the EPS bearer to the IPsec transfer path and the PMIP transfer path (S234). Specifically, when UE 12 has performed communication via EPS bearer 3 for general calls that is identified by the flow identification information of TFT2, transmission and reception of data of TFT2 is switched to the communication through the IPsec transfer path and the PMIP transfer path.

Thereafter, when UE 12 performs communication of a flow prohibited from being handed off, a communication path is established via access network A to perform communication.

Along with this, flow management table 332 of UE 12 is updated so that the transfer path of the flow for which handover is permitted is associated with "IPsec transfer path" as shown in FIG. 12(b). Specifically, the transfer path of the flow identified by TFT2 is updated to "IPsec transfer path". The transfer path for the communication of which handover was rejected may be retained. That is, the communication path for emergency calls identified by TFT1 is associated with an established EPS bearer such as "EPS bearer 2" or the like.

Further, flow management table 432 of PGW 22 is updated so that the transfer path for the flow for which handover is permitted is associated with "PMIP transfer path" as shown in FIG. 12(c). Specifically, the transfer path of the flow identified by TFT2 is updated to "PMIP transfer path". The transfer path for the communication of which handover was rejected may be retained. That is, the communication path for emergency calls identified by TFT1 is associated with an established EPS bearer such as "EPS bearer 2" or the like.

Further, flow management table 532 of GW 70 is updated so that the transfer path for the flow for which handover is permitted is associated with "IPsec transfer path and PMIP transfer path" as shown in FIG. 12(d). Specifically, the transfer path of the flow identified by TFT2 is updated to "IPsec transfer path and PMIP transfer path".

GW 70 receives packets of TFT2 flow transmitted by UE 12 through the IPsec transfer path and transmits the packets to the PMIP transfer path by reference to flow management table 532. Further, GW 70 receives the packets of TFT2 flow transmitted from PGW 22 and addressed to UE 12 through the PMIP transfer path and transmits the packets to the IPsec transfer path by reference to flow management table 532.

### (c) The procedure at Step S20

Next, the procedure at Step S20 will be described using FIG. 16(c).

(c-1) PGW 22 transmits a position register response to GW 70 (S240). This position register response indicates that handover will be permitted for the communications of all flows UE 12 requests as has been done conventionally.

(c-2) GW 70 receives the position register response from PGW 22, confirms that handover all the communications is permitted and transmits a flow switch response to UE 12 (S242). This flow switch response indicates that handover should be permitted for all the communication UE 12 requests.

(c-3) UE 12 and PGW 22 continue communication (data transmission and reception) by switching the transfer path for all the communications UE 12 has requested to the IPsec transfer path and the PMIP transfer path (S244). UE 12 and PGW 22 are connected by the IPsec transfer path between UE 12 and GW 70 and the PMIP transfer path between GW 70 and PGW 22.

Specifically, when handover was requested using TFT3 that identifies communication flows of voice calls including an emergency call (TFT1) and other general calls (TFT2), communication is continued by handing over all of the emergency call and other general calls.

Along with this, flow management table 332 of UE 12 is updated so that the transfer path of the flow for which handover is permitted is associated with "IPsec transfer path" as shown in FIG. 12 (f) . Specifically, the transfer path of the flows identified by TFT1 and TFT2 is updated to "IPsec transfer path". It is also possible to delete the information corresponding to TFT1 and TFT2 and associate "IPsec transfer path" with the flows identified by TFT3 to perform flow management.

Further, flow management table 432 of PGW 22 is updated so that the transfer path for the flow for which handover is permitted is associated with "PMIP transfer path" as shown in FIG. 12 (g). Specifically, the transfer path of the flows identified by TFT1 and TFT2 is updated to "PMIP transfer path". The transfer path for the communication for which handover was rejected may be retained. It is also possible to delete the information corresponding to TFT1 and TFT2 and associate the IPsec transfer path with the flows identified by TFT3 to perform flow management.

Further, flow management table 532 of GW 70 is updated so that the transfer path for the flow for which handover is permitted is associated with "IPsec transfer path and PMIP transfer path" as shown in FIG. 12(h). Specifically, the transfer path of the flows identified by TFT1 and TFT2 is updated to "IPsec transfer path and PMIP transfer path".

It is also possible to delete the information corresponding to TFT1 and TFT2 and associate "IPsec transfer path" with the flows identified by TFT3 to perform flow management. GW 70 receives packets of TFT3 flow transmitted by UE 12 through the IPsec transfer path and transmits the packets to the PMIP transfer path by reference to flow management table 532. Further, GW 70 receives the packets of TFT3 flow transmitted from PGW 22 and addressed to UE 12 through the PMIP transfer path and transmits the packets to the IPsec transfer path by reference to flow management table 532.

As described above, even when emergency calls are prohibited in the access network to which handover is performed, handover of general calls other than emergency call communication is made possible, though in the conventional handover, it was only possible to reject the handover of all the connections including general calls. Further, determination of handover can be made based on the operator' s policy inside the core network.

With the arrangement, by applying the operator's policy to the management apparatus in the core network, it become possible to make such operation that communication for emergency calls will be performed through access network A alone. This configuration is able to deal with the policy of an operator who schemes such operation as to have the communication for emergency calls performed via access network A and have the communication via access network B used for communication for general calls other than emergency calls, even though the communication path via access network B can, indeed, keep the quality for emergency call communication and permit handover from the communication path via access network A.

That is, the network operator is able to control handover permission/permissionfor every flow or every bearer, in response to handover requests from UEs, in accordance with the operator's policy depending on the communication conditions within the network.

Though the present embodiment was described by assuming an emergency call as a specific communication to be prohibited from being handed off, the operator can define the specific communication in any form, not limited to the above. Further, the specific communication for which handover is prohibited is not limited to a single kind, but multiple kinds of communication can be specified.

### [3. The Third Embodiment]

Next, the third embodiment of a mobile communication system to which the present invention is applied will be described in detail using diagrams.

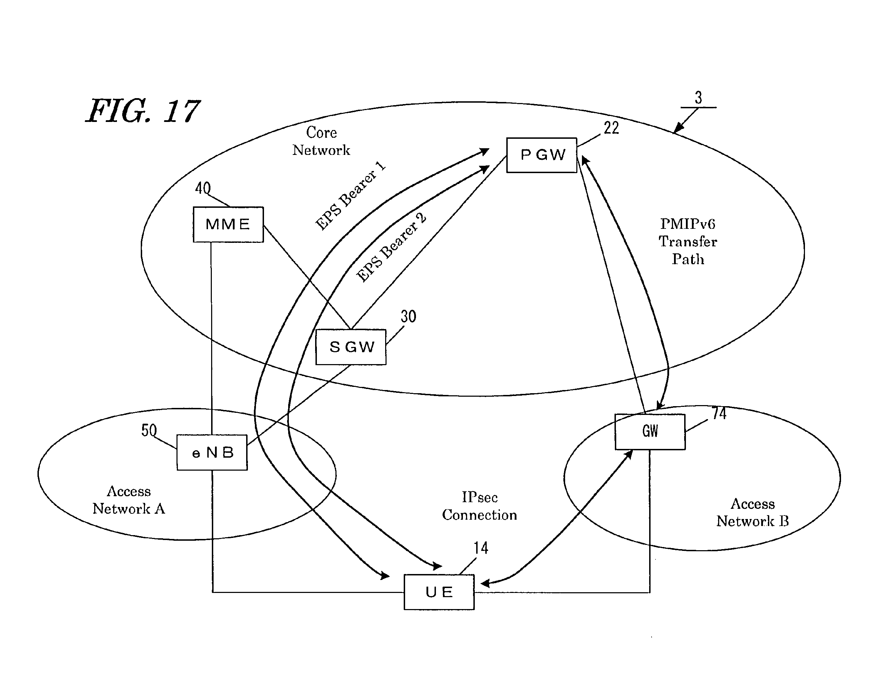

First, the network configuration in the present embodiment will be described with reference to FIG. 17. FIG. 17 shows a configuration in which the UE and GW in the network configuration of the second embodiment is replaced by a UE 14 and a GW 74, respectively. The difference from the second embodiment is that GW 70 that connects access network B with the core network in the second embodiment is an apparatus inside the core network whereas the GW in the embodiment is an apparatus inside access network B.

This is based on the difference in operating style between operators. The second embodiment is a case in which the core network operator is different from the operator of access network B while there is no relationship of mutual confidence between the two. Specifically, a case in which use of the UE authorizing function provided inside the core network is not permitted corresponds to this case. Therefore, if a UE connects to the core network via access network B, it is necessary for the UE to connect to the core network using a security function such as IPsec or the like.

On the other hand, the present embodiment, differing from the second embodiment, corresponds to a case where the core network operator and the operator of the access network are the same or have a relationship of mutual confidence between them. Specifically, a case in which use of the UE authorizing function provided inside the core network is permitted.

First, a UE 14 (mobile station: User Equipment) is connected to the core network via a plurality of radio access networks. Access network A includes a base station (eNB 50) to which UE 14 connects and is connected to the core network via a gateway (SGW 30).

The core network is installed with a GW (PGW 22) that forwards communication data transmitted from other mobile stations to a mobile station and is connected to SGW 30. Further, the core network is installed with a management apparatus (MME 40) that receives a request for transfer path establishment from UE 14 and takes control of the procedure for establishing a bearer (EPS bearer) as a transfer path between UE 14 and PGW 22 via eNB 50 and SGW 30. The EPS bearer is a QoS-supporting transfer path between UE 14 and PGW 22 by way of access network A.

Access network B is connected to the core network via a GW 74. Here, GW 74 that connects access network B with the core network is an apparatus inside access network B. Since there is a relationship of mutual confidence between the operators, GW 74 can connect to PGW 22 that is located inside the core network. UE 14 is connected with PGW 22 by the radio link established to connect to access network B and the transfer path established between GW 74 and PGW 22 based on PMIPv6, without the necessity of establishing a transfer path to be established between UE 14 and GW 74 based on IPsec.

As above, in the mobile communication system using packet communication in the present embodiment, UE 14 is connected to the core network by the transfer path of the bearer that supports QoS via access network A and by the radio link and the transfer path based on PMIPv6 via access network B.

### [3.2. Equipment Configurations]

Subsequently, each apparatus configuration will be briefly described with reference to the drawings. Here, SGW 30, MME 40 and eNB 50 have the same configurations as those of the conventional equipment in SAE and PGW 22 has the same configuration as the apparatus of the second embodiment so that detailed description is omitted.

### [3.2.1 UE Configuration]

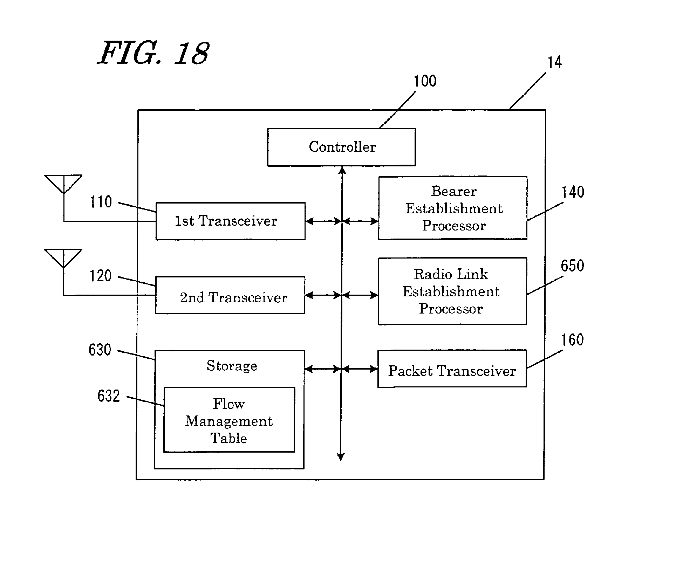

First, the configuration of UE 14 as a mobile station will be described using a block diagram in FIG. 18. Here, as a specific example of UE 14, a terminal such as mobile terminal, PDA or the like, which simultaneously connects to the core network via a plurality of access networks, is supposed. Here, in UE 14 in FIG. 18, the same components as those in UE 12 in FIG. 11 are allotted with the same reference numerals, and description of the functional parts allotted with the same reference numerals is omitted.

As shown in FIG. 18, UE 14 includes a controller 100, to which a first transceiver 110, a second transceiver 120, a storage 630, a bearer establishment processor 140, a radio link establishment processor 650 and a packet transceiver 160 are connected.

Storage 630 is a functional unit for storing programs, data, etc., necessary for UE 14 to perform various kinds of operations. Storage 630 further stores a flow management table 632 for storing flow information for identifying applications in association with transfer paths for transmission.

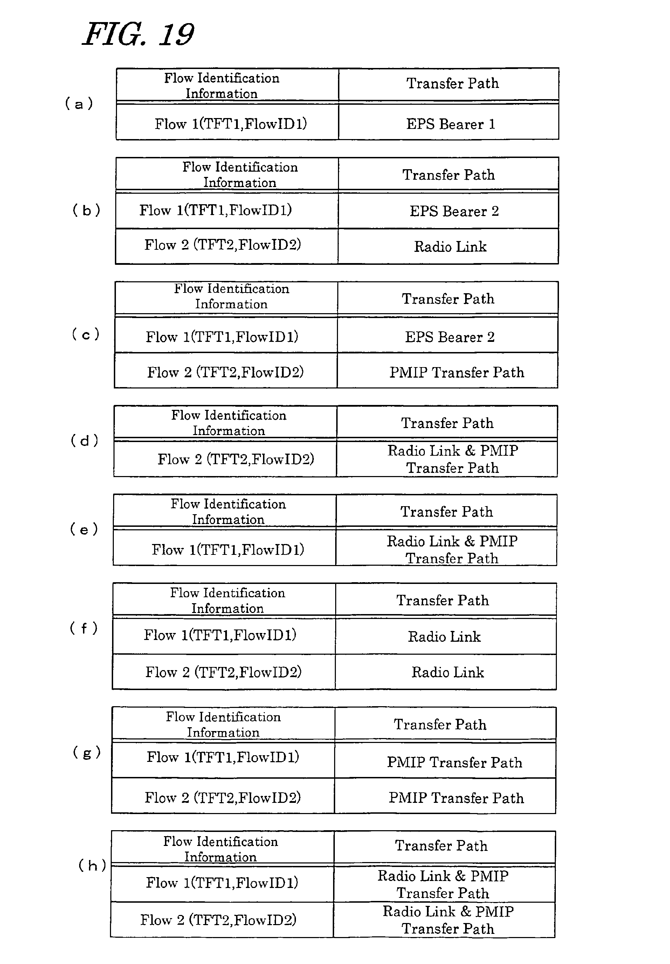

Here, FIG. 19 (a) shows one data configuration example of the flow management table 632. As shown in FIG. 19(a), flow identification information (e.g., "flow 1 (TFT1, Flow ID1)" is stored in association with a transfer path (e. g. , "EPS bearer 1").

Radio link establishment processor 650 is a functional part for establishing a radio communication path that connects to the core network via access network B.

### [3.2.2 GW Configuration]

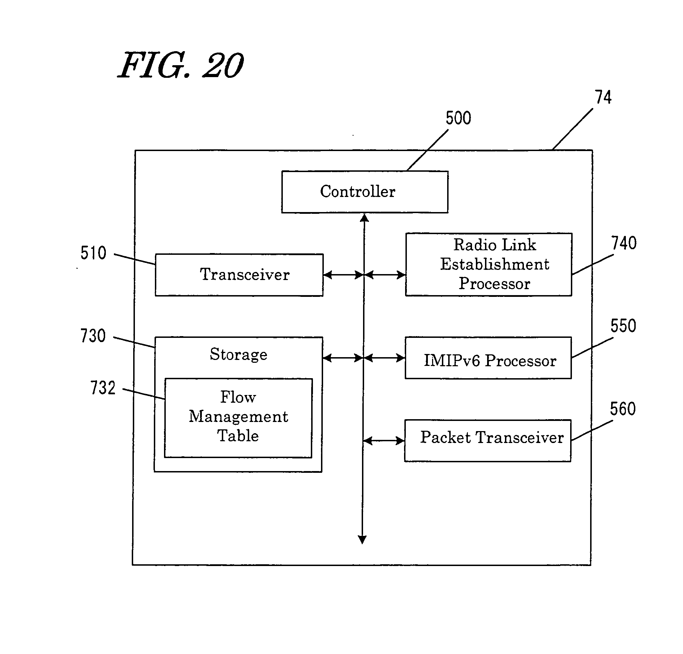

Next, the configuration of GW 74 in the present embodiment will be described based on FIG. 20. Here, in GW 74 in FIG. 20, the same components as those in GW 70 in FIG. 14 are allotted with the same reference numerals, and description of the functional parts allotted with the same reference numerals is omitted.

GW 74 includes a controller 500, to which a transceiver 510, a storage 730, a radio link establishment processor 740, a PMIPv6 processor 550 and a packet transceiver 560 are connected.

Storage 730 is a functional unit for storing programs, data, etc., necessary for GW 74 to execute various operations. Storage 730 further stores a flow management table 732 for storing flow identification information for identifying applications in association with transfer paths for transmission.

Here, FIG. 19(e) shows one data configuration example of the flow management table. As shown in FIG. 19(e), flow identification information (e.g., "flow 1 (TFT1, FlowID1)" is stored in association with a transfer path (e.g., "radio link and PMIP transfer path").

When having received a packet to UE 14 from PGW 22, GW 74 solves the radio link from flow management table 732 and transmits the packet to UE 14. When having received a packet transmitted by UE 14, GW 74 solves the PMIP transfer path from flow management table 732 and transmits the packet to PGW 22.

Radio link establishment processor 740 is a functional part that executes a process of establishing a radio communication path for UE 14 to connect to access network B and perform communication.

### [3.3. Communication Path Establishment Procedure]

In the network shown in FIG. 17, the communication path establishment procedure of UE 14 for connecting to the core network via access network A to establish a communication path is the same as the communication path establishment procedure explained in the second embodiment, so that detailed description is omitted.

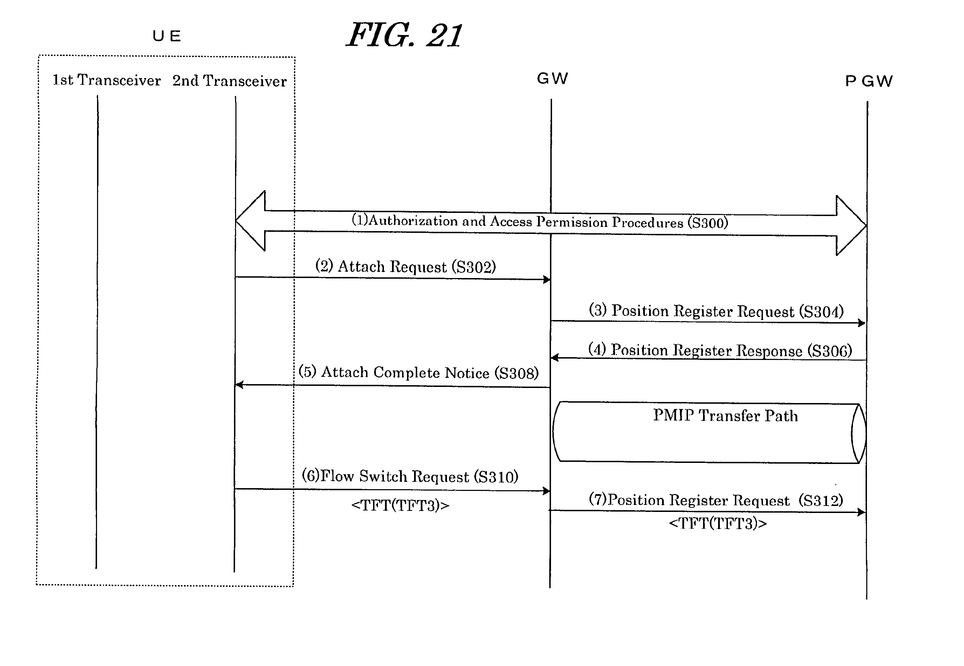

Referring next to a sequence diagram in FIG. 21, the procedures of UE 14, GW 74 and PGW 22 when UE 14 connects to the core network via access network B to establish a radio link and a DSMIPv6 communication path, will be described. Here, UE 14 performs the procedure by transmitting and receiving control information by means of second transceiver 120 that connects to access network B.

(1) UE 14 detects the possibility of radio connection to access network B and performs procedures of authorization and access permission for connection (S300).

The authorization and access permission procedures are performed between UE 14, GW 74 and an authorizing apparatus (e.g., PGW 22) in the core network, using the profiles such as the identification information of the UE, the subscriber data, etc., based on the operator's policy.

GW 74 that establishes a radio link with UE 14 is an apparatus inside access network B that connects access network B with the core network. UE 14 detects GW 74 by using a DNS service or the like.

Further, in this procedure, UE 14 transmits a message included with an access point name (APN) for identifying the PGW to be connected to.

(2) When UE 14 has been authorized and permitted to access, UE 14 transmits an attach request to GW 74 (S302). The attach request that UE 14 transmits includes an access point name (APN) for identifying the PGW to be connected to.

(3) GW 74 having received the attach request transmits a position register request defined by PMIPv6 to PGW 22 (S304). The message includes the identification information on UE 14, HoA of UE 14 and the GW 74's address as positional information.

Here, if UE 14 has been authorized and permitted to access, it is not always necessary for UE 14 to transmit an attach request as in S302. In this case, when GW 74 detects the fact that the authorization and access permission procedures at S300 have been completed, the GW 74 transmits a position register request defined by PMIPv6 to PGW 22.

(4) PGW 22 transmits a position register response, to GW 74, based on PMIPv6 (S306). The position register response includes HoA and CoA. It is also possible to assign IPv4 HoA, depending on the request at S304. In this way, a PMIP transfer path is established between GW 74 and PGW 20.

(5) GW 74 transmits an attach complete notice to UE 14 (S308). Thus, a radio link is established between UE 14 and GW 74.

By the procedure as above, UE 14 is connected via access network B to establish a communication path.

The description herein was made on a case where UE 14 performs connection via access network A and then performs connection via access network B. However, connection may be established by changing the order.

### [3.4. Handover Procedure]

Subsequently, the procedure of a case where communication of UE 14 is handed over from access network A to access network B will be described with reference to FIG 8 and FIGS. 21 and 22. In this case, UE 14 uses second transceiver 120 connecting to access network B to transmit and receive control information to achieve the procedure.

Description will be given first based on FIG. 21. Here, UE 14 has already established a radio link and PMIP transfer path by the above-described procedures. Further, description herein will be given on the assumption that UE 12 has already established a specific EPS bearer and is performing communication.

(6) UE 14 transmits a flow switch request to GW 74 to make a request for a handover (S310). The flow switch request is not included with individual TFTs (TFT1 and TFT2) for an emergency call and a general call, but is included with flow identification information that identifies voice calls including emergency calls and general calls, and transmitted.

Here, the flow identification information is information based on which an application is identified and uses a TFT (Traffic Flow Template) composed of an IP address, a port number and a protocol number and the like. TFT1 for an emergency call and TFT2 for a general call have approximately the same information. To distinguish between them, information factors such as QoS information of the TFT and the like can be used.

Accordingly, by indicating ANY or the like as the QoS information it is possible to provide flow identification information (TFT3) that identifies a voice call and comprehends TFT1 for an emergency call and TFT2 for a general call. Alternatively, the flow identification information may be a flow ID, similarly to the first embodiment.

In other words, UE 14 that connects to the core network by an attach procedure in order to get a certain service can hold a TFT for the service including a plurality of flows for communication. As a result, it is no longer necessary to transmit handover requests by designating individual TFTs separately for an emergency call and a general call, hence it is possible to simplify the procedure.

Also, when a request is made so that all the communications UE 14 is performing will be handed off, it is also possible for UE 14 to direct all the communications to be handed over, by not giving any flow identification information.

At the step of a flow switch request (S310) in FIG. 21, UE 14 makes a request for a handover of voice call service to GW 74 by adding TFT3 as the flow identification information that identifies a voice call.

(7) GW 74, as receiving the flow switch request from UE 14, transmits a position register request defined in PMIPv6 to PGW 22 so as to request handover (S312). The position register request includes the flow identification information that is included in the flow switch request, and is transmitted.

PGW 22 having received the position register request determines the feasibility of handover and transmits a position register response to UE 14. The determination of handover feasibility is performed by the handover feasibility decision process shown in FIG. 8, for example, similarly to the second embodiment.

When PGW 22 checks the presence of a handover policy and there is a handover policy (Step S12; Yes), PGW 22 checks whether the communication identified by the flow identification information for which handover is requested includes a communication prohibited from being handed off, and whether the prohibited communication is being performed (Step S14).

For example, when a handover is requested by designating the flow identification information as a flow of a voice call, PGW 22 refers to the communication for which a handover is prohibited in handover policy management table 234, and resultantly detects the fact that an emergency call is prohibited and also detects that the flows of the voice call for which a handover is requested include a flow that identifies an emergency call. Further, PGW 22 determines whether UE 14 is performing communication of an emergency call.

In order to determine whether communication of an emergency call is being engaged, it is possible to confirm that communication of an emergency call is being engaged by monitoring the actual traffic based on the flow identification information that identifies an emergency call, or it is also possible to check the fact that the EPS bearer for an emergency call (EPS bearer 2) has been established. Without regard to an emergency call, it is also possible to determine whether communication of a flow to be prohibited from being handed off is being performed, using the same technique.

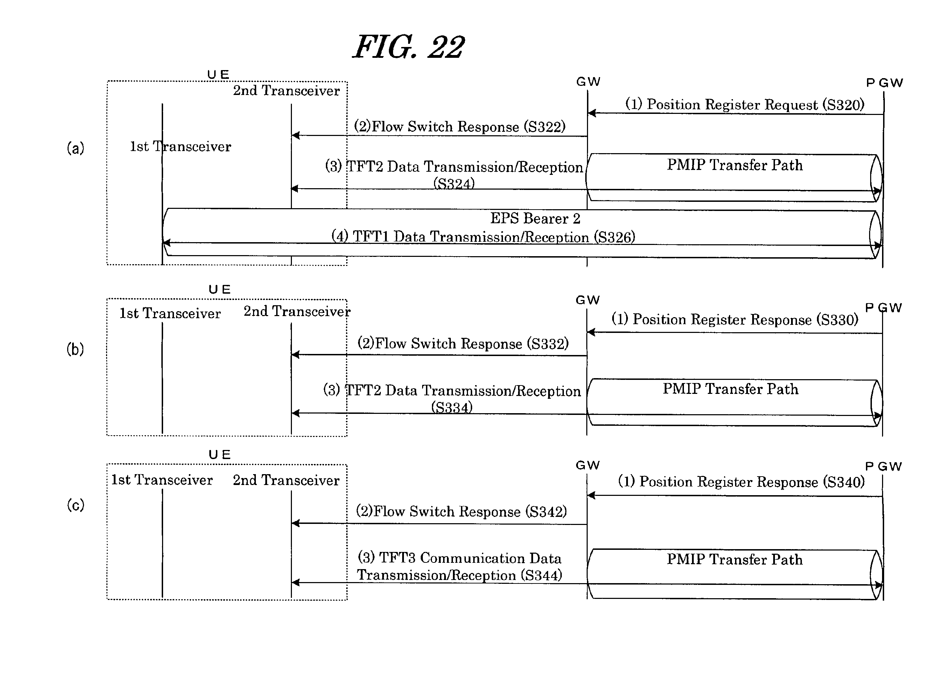

Here, the procedures effected at Steps S16, S18 and S20 in FIG. 8 will be described using FIG. 22.

### (a) The procedure at Step S16

First, the procedure at Step S16 will be described using FIG. 22(a).

(a-1) PGW 22 transmits a position register response (notice of rejection of handover of an emergency call alone) to GW 74 to notify rejection of handover of the flow to be prohibited from being handed off and permission of handover of other flows (S320). As an information factor in the position register response, information on the flow to be prohibited from being handed off is included and transmitted.

The information on the flow to be prohibited from being handed off may be flow identification information such as TFT or the like, or may be information that identifies the transfer path such as an EPS bearer or the like. Specifically, when a flow of an emergency call in the present embodiment is prohibited, TFT1 that identifies an emergency call may be notified or EPS bearer 2 may be notified.

(a-2) GW 74 receives the position register response and transmits a flow switch response (notice of rejection of handover of an emergency call alone) to UE 14 (S322). The flow switch response includes information on the flow to be prohibited from being handed off included in the position register response, and is transmitted.

(a-3) UE 14, GW 74 and PGW 22 continue communication (data transmission and reception) by switching the communication of a flow permitted to be handed off, from the EPS bearer to the IPsec transfer path and the PMIP transfer path (S324). Specifically, when UE 14 has performed communication via EPS bearer 3 for general calls that is identified by the flow identification information of TFT2, transmission and reception of data of TFT2 is switched to the communication through the IPsec transfer path between UE 14 and GW 74 and the PMIP transfer path between GW 74 and PGW 22.

(a-4) UE 14 and PGW 22 do not perform handover for the flow for which a handover was rejected, and continue communication (data transmission and reception) through the EPS bearer (S326). Specifically, UE 12 continues communication of the emergency call identified by the flow identification information of TFT1, through EPS bearer 2.

Along with this, flow management table 632 of UE 14 is updated so that the transfer path of the flow for which handover is permitted is associated with "radio link" as shown in FIG. 19(b). Specifically, the transfer path of the flow identified by TFT2 is updated to "radio link". As to the communication that was rejected to be handed off will not be updated. Accordingly, the transfer path for an emergency call identified by TFT1 is retained as "EPS bearer 2".

Further, flow management table 732 of PGW 22 is updated so that the transfer path for the flow for which handover is permitted is associated with "PMIP transfer path" as shown in FIG. 19(c). Specifically, the transfer path of the flow identified by TFT2 is updated to "PMIP transfer path". As to the communication that was rejected to be handed off will not be updated. Accordingly, the transfer path for an emergency call identified by TFT1 is retained as "EPS bearer 2".

Further, flow management table 732 of GW 74 is updated so that the transfer path for the flow for which handover is permitted is associated with "radio link and PMIP transfer path" as shown in FIG. 19 (d). Specifically, the transfer path of the flow identified by TFT2 is updated to "radio link and PMIP transfer path". GW 74 receives packets of TFT2 flow transmitted by UE 14 through the radio link and transmits the packets to the PMIP transfer path by reference to flow management table 732. Further, GW 74 receives the packets of TFT2 flow transmitted from PGW 22 and addressed to UE 12 through the PMIP transfer path and transmits the packets to the radio link by reference to flow management table 732.

### (b) The procedure at Step S18

Next, the procedure at Step S18 will be described using FIG. 22(b).

(b-1) PGW 22 transmits a position register response (notice of disapproval of emergency call) for notice of permission to GW 74 (S330). As an information factor in the position register response, information on the communication of flows to be prohibited from being handed off is added. For example, it is notified that communication of an emergency call will not be allowed through the PMIP transfer path from this time on.

The information on the communication of a flow to be prohibited from being handed off may be flow identification information such as TFT or the like, or may be information that identifies the transfer path such as an EPS bearer or the like. Specifically, when a flow of an emergency call in the present embodiment is prohibited, TFT1 that identifies an emergency call may be notified or EPS bearer 2 may be notified.

(b-2) GW 74 receives the position register response and transmits a flow switch response (notice of disapproval of emergency call) to UE 14 (S332). The flow switch response includes information on the flow to be prohibited from being handed off included in the position register response, and is transmitted.

(b-3) UE 14, GW 74 and PGW 22 continue communication by switching the communication permitted to be handed off, from the EPS bearer to the IPsec transfer path and the PMIP transfer path (S334). Specifically, when UE 14 has performed communication via EPS bearer 3 for general calls that is identified by the flow identification information of TFT2, transmission and reception of data of TFT2 is switched to the communication through the radio link and the PMIP transfer path.

Thereafter, when UE 14 performs the communication prohibited from being handed off, a communication path is established via access network A to perform communication.

Along with this, flow management table 632 of UE 14 is updated so that the transfer path of the flow for which handover is permitted is associated with "radio link" as shown in FIG. 19(b). Specifically, the transfer path of the flow identified by TFT2 is updated to "radio link". The transfer path for the communication of which handover was rejected may be retained. That is, the communication path for emergency calls identified by TFT1 is associated with an established EPS bearer such as EPS bearer 2 or the like.

Further, flow management table 432 of PGW 22 is updated so that the transfer path for the flow for which handover is permitted is associated with "PMIP transfer path" as shown in FIG. 19(c). Specifically, the transfer path of the flow identified by TFT2 is updated to "PMIP transfer path". The transfer path for the communication of which handover was rejected may be retained. That is, the communication path for emergency calls identified by TFT1 is associated with an established EPS bearer such as "EPS bearer 2" or the like.

Further, flow management table 732 of GW 74 is updated so that the transfer path for the flow for which handover is permitted is associated with "radio link and PMIP transfer path" as shown in FIG. 19 (d). Specifically, the transfer path of the flow identified by TFT2 is updated to "radio link and PMIP transfer path". GW 74 receives packets of TFT2 flow transmitted by UE 14 through the radio link and transmits the packets to the PMIP transfer path by reference to flow management table 732. Further, GW 74 receives the packets of TFT2 flow transmitted from PGW 22 and addressed to UE 14 through the radio link and transmits the packets to the IPsec transfer path by reference to flow management table 732.

### (c) The procedure at Step S20

Next, the procedure at Step S20 will be described using FIG. 22(c).

(c-1) PGW 22 transmits a position register response to GW 74 (S340). This position register response indicates that handover will be permitted for the communications of all flows UE 14 requests as has been done conventionally.

(c-2) GW 74 receives the position register response from PGW 22, confirms that handover of all the communications is permitted and transmits a flow switch response to UE 14 (S342). This flow switch response indicates that handover should be permitted for all the communication UE 14 requests.

(c-3) UE 14 and PGW 22 continue communication (data transmission and reception) by switching the transfer path for all the communications UE 12 has requested to the radio link and the PMIP transfer path (S344). UE 14 and PGW 22 are connected by the radio link between UE 14 and GW 74 and the PMIP transfer path between GW 74 and PGW 22.

Specifically, when handover was requested using TFT3 that identifies communication flows of voice calls including an emergency call (TFT1) and other general calls (TFT2), communication is continued by handing over all of the emergency call and other general calls.

Along with this, flow management table 632 of UE 14 is updated so that the transfer path of the flow for which handover is permitted is associated with "radio link" as shown in FIG. 19 (f). Specifically, the transfer path of the flows identified by TFT1 and TFT2 is updated to "radio link". It is also possible to delete the information corresponding to TFT1 and TFT2 and associate "radio link" with the flows identified by TFT3 to perform flow management.

Further, flow management table 432 of PGW 22 is updated so that the transfer path for the flow for which handover is permitted is associated with "PMIP transfer path" as shown in FIG. 19 (g). Specifically, the transfer path of the flows identified by TFT1 and TFT2 is updated to "PMIP transfer path". The transfer path for the communication for which handover was rejected may be retained.

It is also possible to delete the information corresponding to TFT1 and TFT2 and associate the PMIP transfer path with the flows identified by TFT3 to perform flow management.

Further, flow management table 732 of GW 70 is updated so that the transfer path for the flow for which handover is permitted is associated with "radio link and PMIP transfer path" as shown in FIG. 19 (h). Specifically, the transfer path of the flows identified by TFT1 and TFT2 is updated to "radio link and PMIP transfer path".

It is also possible to delete the information corresponding to TFT1 and TFT2 and associate "radio link and PMIP transfer path" with the flows identified by TFT3 to perform flow management. GW 74 receives packets of TFT3 flow transmitted by UE 12 through the radio link and transmits the packets to the PMIP transfer path by reference to flow management table 732. Further, GW 74 receives the packets of TFT3 flow transmitted from PGW 22 and addressed to UE 14 through the PMIP transfer path and transmits the packets to the radio link by reference to flow management table 732.

As described above, even when emergency calls are prohibited in the access network to which handover is performed, handover of general calls other than emergency call communication is made possible, though in the conventional handover, it was only possible to reject the handover of all the connections including general calls. Further, determination of handover can be made based on the operator' s policy inside the core network.

With the arrangement, by applying the operator's policy to the management apparatus in the core network, it become possible to make such operation that communication for emergency calls will be performed through access network A alone. This configuration is able to deal with the policy of an operator who schemes such operation as to have the communication for emergency calls performed via access network A and have the communication via access network B used for communication for general calls other than emergency calls, even though the communication path via access network B can, indeed, keep the quality for emergency call communication and permit handover from the communication path via access network A.

That is, the network operator is able to control handover permission/permission for every flow or every bearer, in response to handover requests from UEs, in accordance with the operator's policy depending on the communication conditions within the network.

Though the present embodiment was described by assuming an emergency call as a specific communication to be prohibited from being handed off, the operator can define the specific communication in any form, not limited to the above. Further, the specific communication for which handover is prohibited is not limited to a single kind, but multiple kinds of communication can be specified.

### [4. Variational Example]

As the embodiment of this invention has been described in detail with reference to the drawings, the specific configuration should not be limited to the embodiment. Designs and others that do not depart from the gist of this invention should also be included in the scope of claims.

The program to be operated in each apparatus in each of the embodiments is a program (program that makes a computer function) for controlling a CPU or the like so as to realize the functions of the above-described embodiment mode. The data to be handed in these apparatus is temporarily stored in a temporary storage device (e.g., RAM) at the time of processing, then is stored into ROM, HDD and/or storage devices and is read out, modified and written in by the CPU, as necessary.

Herein, the recording medium for storing program may be any of semiconductor mediums (e.g., ROM, non-volatile memory card, etc.), optical recordingmediums/magneto optical recording mediums (e.g., DVD (Digital Versatile Disc), MO (Magneto Optical Disc), MD (Mini Disc), CD (Compact Disc), BD and the like). Alternatively, the functions of the above-described embodiment mode are realized by executing the loaded program, but in accordance with the directions of the program, the functions of the present invention may also be realized by cooperating with the operating system, another application program or the like.

To put the product on the market, the program may be stored on a storing medium, or may be transferred to a server computer connected to a network such as the Internet or the like. In this case, the storage device of the server computer is of course included in the present invention.

Further, the whole or part of each apparatus in the above-described embodiment may be typically realized by an LSI (Large Scale Integration) as an integrated circuit. Each functional block of each apparatus may be separately given in the form of a chip, or the whole or part of the blocks may be integrated into a chip. The circuit integration may be realized in the form of a dedicated circuit or general purpose processor, not limited to LSI. It goes without saying that if a technique of circuit integration replacing LSI technologies with the progress of semiconductor technologies appears, the technology of the integrated circuit can be used. Description of Reference Numerals

1, 2, 3 mobile communication system
10, 12, 14UE
   100 controller
   110 first transceiver
   120 second transceiver
   130, 330, 630 storage
      132, 332, 632 flow management table
   140 bearer establishment processor
   150 DSMIPv6 processor
   160 packet transceiver
   350 IPsec processor
   650 radio link establishment processor 20, 22 PGW
   200 controller
   210 transceiver
   230, 430 storage
      232, 432 flow management table
      234 handover policy management table
   240 bearer establishment processor
   250 DSMIPv6 processor
   260 packet transceiver
   450 PMIPv6 processor
30 SGW
40 MME
50 eNB
60 AR
70, 74 GW
   500 controller
   510 transceiver
      532, 732 flow management table
   540 IPsec processor
   550 PMIPv6 transceiver
   560 packet transceiver
   740 radio link establishment processor

## Claims

1. A control station apparatus which is set with a path for performing communication of a plurality of flows with a mobile station apparatus connectable to, a first access network in which a bearer transfer path that guarantees a predetermined QoS has been established, and a second access network in which a transfer path different from the first access network has been established, by way of the transfer path of the first access network, comprising:
a flow determining means for determining whether handover of the transfer path of the flows should be permitted or not; and,
aposition register request receivingmeans for receiving a position register request for performing communication via the transfer path of the second access network, from the mobile station apparatus, wherein
out of the flows included in the communications requested by the position register request, in a flow in which transfer path is determined to be permitted to be handed off by the flow determining means, the transfer path is handed over to that through the second access network whereas in a flow in which the transfer path is determined not to be permitted to be handed off, communication is continued through the first access network.

2. The control station apparatus according to Claim 1, further comprising a position register response transmitting means for transmitting a position register response that indicates a feasibility of position registering, to the mobile station apparatus, based on the position register request received by the position register request receiving means, **characterized in that**
the position register response includes information on flows for which it is determined by the flow determining means that handover of the transfer path has not been permitted.

3. Amobile station apparatus connectable to, a first access network in which a bearer transfer path that guarantees a predetermined QoS has been established, and a second access network in which a transfer path different from the first access network has been established, and set with a path for performing communication of a plurality of flows with a control station by way of the transfer path of the first access network, comprising:
a position register request transmitting means for transmitting a position register request for performing communication via the transfer path of the second access network;
a position register response receiving means for receiving a position register response that indicates a feasibility of position registering, based on the position register request, from the control station apparatus; and,
a transfer path switching means for switching the transfer path of the communication with the control station apparatus, based on the position register response received by the position register response receiving means, wherein
the position register response includes information on a flow for which handover of the transfer path is not permitted, and the transfer path switching means causes the flows included in the position register response to communicate via the first access network and the other flows to communicate by switching the transfer path to the second access network.

4. A gateway apparatus which connects a mobile station apparatus connectable to, a first access network in which a bearer transfer path that guarantees a predetermined QoS has been established, and a second access network in which a transfer path different from the first access network has been established, with a control station apparatus which is set with a path for performing communication of a plurality of flows with the mobile stationapparatusbywayof the transfer path of the first access network, by way of the transfer path of the second access network, comprising:
a position register response receiving means for receiving a position register response that includes information on a flow for which handover of the transfer path is not permitted, from the control station apparatus; and
a position register response transmitting means for transmitting the position register response to the mobile station apparatus, by way of the transfer path of the second access network.

5. Amobile communication system comprising: a mobile station apparatus connectable to, a first access network in which a bearer transfer path that guarantees a predetermined QoS has been established, and a second access network in which a transfer path different from the first access network has been established; and a control station apparatus which is set with a path for performing communication of a plurality of flows by way of the transfer path of the first access network, the control station apparatus comprising:
a flow determining means for determining whether handover the transfer path of the flows should be permitted or not; and,
a position register request receiving means for receiving a position register request for performing communication via the transfer path of the second access network, from the mobile station apparatus, and
out of the flows included in the communications requested by the position register request, in a flow in which transfer path is determined to be permitted to be handed off by the flow determining means, the transfer path is handed over to that through the second access network, whereas in a flow in which the transfer path is determined not to be permitted to be handed off, communication is continued through the first access network.

6. A communication method in a mobile communication system comprising: a mobile station apparatus connectable to, a first access network in which a bearer transfer path that guarantees a predetermined QoS has been established, and a second access network in which a transfer path different from the first access network has been established; and a control station apparatus which is set with a path for performing communication of a plurality of flows by way of the transfer path of the first access network, **characterized in that**
the control station apparatus determines whether handover of the transfer path of the flows should be permitted or not,
receives a position register request for performing communication via the transfer path of the second access network, from the mobile station apparatus, and
switches the transfer path to that through the second access network in a flow in which transfer path is determined to be permitted to be handed off, out of the flows included in the communications requested by the position register request, and continues communication through the first access network for a flow that is determined not to be permitted to be handed off.
